# EUROPEAN PATENT APPLICATION

(11) **EP 4 203 301 A1**
(43) Date of publication of application: **28.06.2023**
(21) Application number: 21859795.3
(22) Date of filing: 16.06.2021
(51) Int. Cl.: H02S 40/30

(54) **TURN-OFF APPARATUS FOR PHOTOVOLTAIC MODULE AND TURN-OFF METHOD FOR PHOTOVOLTAIC MODULE**

(30) Priority: 24.08.2020 CN 202010859980; 24.08.2020 CN 202010859981
(71) Applicant: Fonrich (Shanghai) New Energy Technology Co. Ltd., Shanghai 201114 (CN)
(72) Inventor: ZHANG, Yong, Shanghai 201114 (CN)
(74) Representative: Grünecker Patent- und Rechtsanwälte PartG mbB
(86) International application number: PCT/CN2021/100309
(87) International publication number: WO 2022/041951

(57) **Abstract**

Provided is a shutdown device and method for a photovoltaic assembly. The shutdown device for a photovoltaic assembly includes a shutdown module. The shutdown module includes a toggle switch, a controller, and a communication unit provided to the photovoltaic assembly. The controller monitors whether a specified parameter of a received power line carrier signal satisfies a preset feature and in response to the specified parameter not satisfying the preset feature or not receiving the power line carrier signal within a set period of time, turns off the toggle switch.

## Description

The present disclosure claims priority to Chinese Patent Application No. 202010859980.6 filed with the China National Intellectual Property Administration (CNIPA) on Aug. 24, 2020 and Chinese Patent Application No. 202010859981.0 filed with the CNIPA on Aug. 24, 2020, the disclosures of which are incorporated herein by reference in their entireties.

### TECHNICAL FIELD

The present application relates to the technical field of photovoltaic power generation, for example, a shutdown device and method for a photovoltaic assembly.

### BACKGROUND

A photovoltaic assembly is an important core component of a photovoltaic power generation system, and the excellent performance of the photovoltaic assembly directly affects the overall effect of the power generation system. However, in practice, the photovoltaic assembly is subject to more constraints, and differences in the characteristics of battery assemblies cause the loss of coupling efficiency. A photovoltaic assembly array is typically series-parallel. If a certain battery assembly is subject to shadows or dusts or is blocked or aged, resulting in reduced power, all battery assemblies connected in series in a link may be affected due to reduced current strength. To ensure the working safety and reliability of the photovoltaic array, it is particularly important to give full play to the maximum power generation efficiency of each photovoltaic battery assembly and ensure that each photovoltaic battery assembly is in a normal working state.

The photovoltaic power generation system in a high voltage region needs to comply with the electrical safety code. In recent years, mandatory requirements are gradually added to the relevant electrical code in regions such as the United States and Europe for safety reasons. For this reason, various governments or relevant institutions issued corresponding laws and regulations. Based on the electrical mandatory code, the National Fire Protection Association in the United states modifies the national electrical code and specifies that in the photovoltaic power generation system for residential use, when an emergency occurs, it is required that after an alternating current grid end of the photovoltaic power generation system is turned off, a maximum voltage at a direct current end shall not exceed 80 V The Italian safety code cautions that fire fighters are absolutely not allowed to perform fire extinguishing operations in the presence of a voltage on the building. Germany takes the lead in the implementation of fire safety standards and states that an additional direct current cut-off device needs to be added between an inverter and an assembly in the photovoltaic power generation system. Photovoltaic assembly-level power electronics technology is the main manner to achieve assembly-level shutdown, and application products include a micro-inverter, a power optimizer, and an intelligent control shutdown device. The use of the micro-inverter can fundamentally eliminate a direct current high voltage existing in the photovoltaic system, and the power optimizer and the intelligent control shutdown device of the photovoltaic assembly have an assembly-level shutdown function. The photovoltaic system installed with the power optimizer or the intelligent control shutdown device can timely cut off the connection between each assembly in emergency, eliminate the direct current high voltage existing in the array, and achieve the rapid assembly-level shutdown.

The National Electrical Code 2017 of the United states is used as an example. It is required that the photovoltaic power generation system has a rapid shutdown function, and a maximum voltage between conductors inside the photovoltaic array and between the conductors and the earth shall not exceed about 80 V after the shutdown. The following measures should be taken actively when the photovoltaic power station faces the safety code: to achieve a rapid shutdown, a shutdown device with the shutdown function must be mounted at an output end of the photovoltaic assembly, and a command sending device is mounted to a battery string or a direct current bus which supplies the direct current and needs to be controlled manually. In the event of an emergency such as a fire, it is necessary to actively and rapidly shut down the photovoltaic assembly to cut off the direct current, and the command sending device is used for instructing the shutdown device to shut down the photovoltaic assembly. Countermeasures to shut down the photovoltaic assembly can prevent further deterioration of negative events such as the fire and improve the reliability and safety.

Many countries and regions have listed the assembly-level rapid shutdown of photovoltaic facilities as mandatory requirements. Photovoltaic technologies are widely applied in China, but China has not yet established the code in this field, and the safety standards fall behind the product manufacturing and market promotion. Standardization requirements are put forward in local standards issued by Anhui Fire Brigade of Public Security. Although Jiaxing in Zhejiang puts forward group standards, but does not put forward compulsory requirements for the rapid shutdown of the assembly, and puts forward only the concept of "should be provided". Many domestic and foreign cases of roof photovoltaic power station fire cause the assembly-level rapid shutdown urgently to be studied and applied. The potential safety hazards are more likely to be exposed when the photovoltaic technologies are popularized as a daily roofing facility. On the one hand, the design code, construction, and acceptance are required to ensure property and personal safety from the perspective of safety awareness; on the other hand, the industry should be actively promoted to establish more popular mandatory safety standards as soon as possible and develop the shutdown device for the photovoltaic assembly suitable for the rapid shutdown function.

### SUMMARY

Embodiments of the present application provide a shutdown device and method for a photovoltaic assembly.

In a first aspect, an embodiment of the present application provides a shutdown device for a photovoltaic assembly. The shutdown device for a photovoltaic assembly includes a shutdown module provided to the photovoltaic assembly, where the shutdown module includes a toggle switch, a controller, and a communication unit.

The toggle switch is configured to control whether to shut down the photovoltaic assembly.

The controller is configured to control the toggle switch to be turned on or off.

The communication unit is configured to load a power line carrier signal generated by the communication unit onto a cable that serially connects multiple stages of photovoltaic assemblies and further configured to extract a returned power line carrier signal from the cable.

The controller is further configured to operate the communication unit to send a power line carrier signal having a preset feature.

The controller is further configured to monitor, through the communication unit, the returned power line carrier signal extracted from the cable.

The controller is further configured to monitor whether a specified parameter of the extracted returned power line carrier signal satisfies the preset feature and in response to the specified parameter not satisfying the preset feature or not receiving the power line carrier signal within a set period of time, turn off the toggle switch to shut down the photovoltaic assembly.

In a second aspect, an embodiment of the present application provides a shutdown method for a photovoltaic assembly. The method includes the steps described below.

A toggle switch is provided at an output end of each of multiple stages of photovoltaic assemblies, where the toggle switch is configured to control whether to shut down the each stage of photovoltaic assembly.

A controller corresponding to the toggle switch is provided, where the controller is configured to control the toggle switch to be turned on or off, and the controller is provided with a corresponding communication unit.

The controller operates the communication unit to send a power line carrier signal having a preset feature to a cable that serially connects the multiple stages of photovoltaic assemblies.

The controller monitors, through the communication unit, the power line carrier signal returned from the cable.

The controller determines whether a specified parameter of the returned power line carrier signal satisfies the preset feature; and in response to the specified parameter of the returned power line carrier signal not satisfying the preset feature or not receiving the power line carrier signal within a set period of time, the controller turns off the toggle switch to shut down the photovoltaic assembly.

In a third aspect, an embodiment of the present application provides a shutdown method for a photovoltaic assembly. The method includes the steps described below.

Multiple stages of photovoltaic assemblies are configured to be connected in series, and a superimposed voltage of output voltages of the multiple stages of photovoltaic assemblies superimposed on each other is provided to an inverter, where a loop is formed between the multiple stages of photovoltaic assemblies and the inverter.

A shutdown device is provided at an output end of each of the multiple stages of photovoltaic assemblies, where the shutdown device includes a shutdown module provided to the photovoltaic assembly, where the shutdown module includes a toggle switch for controlling whether the each stage of photovoltaic assembly is shut down and a controller for controlling whether the toggle switch to be turned on or off, where the controller is provided with a communication unit.

The controller operates the communication unit to send a power line carrier signal having a preset feature to a cable that serially connects the multiple stages of photovoltaic assemblies.

The controller monitors, through the communication unit, the power line carrier signal returned from the cable.

The controller determines whether a specified parameter of the received returned power line carrier signal satisfies the preset feature.

In response to the specified parameter of the returned power line carrier signal not satisfying the preset feature or not receiving the power line carrier signal within a set period of time, the controller turns off the toggle switch to shut down the photovoltaic assembly.

In a fourth aspect, an embodiment of the present application provides a shutdown device for a photovoltaic assembly. The shutdown device for a photovoltaic assembly includes a shutdown module provided to the photovoltaic assembly, where the shutdown module includes a toggle switch, a controller, and a communication unit.

The toggle switch is configured to control whether to shut down the photovoltaic assembly.

The controller is configured to control the toggle switch to be turned on or off.

The communication unit is configured to load a signal generated by the communication unit onto a cable that serially connects multiple stages of photovoltaic assemblies and further configured to extract a returned signal from the cable.

The controller is further configured to operate the communication unit to send the signal onto the cable.

The controller is further configured to monitor, through the communication unit, the signal returned from the cable.

The controller is further configured to monitor a degree of attenuation of the returned signal; and the controller is further configured to, in response to the degree of attenuation of the returned signal reaching a preset attenuation value, turn off the toggle switch to shut down the photovoltaic assembly.

In a fifth aspect, an embodiment of the present application provides a shutdown method for a photovoltaic assembly. The method includes the steps described below.

A toggle switch is provided at an output end of the photovoltaic assembly, where the toggle switch is configured to control a shutdown state of the photovoltaic assembly.

A controller corresponding to the toggle switch is provided, where the controller controls the toggle switch to be turned on or off, and the controller is provided with a corresponding communication unit.

The controller operates the communication unit to send a signal to a cable that serially connects multiple stages of photovoltaic assemblies.

The controller monitors, through the communication unit, the signal returned from the cable.

The controller determines whether a degree of attenuation of the returned signal reaches a preset attenuation value.

In response to the degree of attenuation of the returned signal reaching the preset attenuation value, the controller turns off the toggle switch to shut down the photovoltaic assembly.

In a sixth aspect, an embodiment of the present application provides a shutdown method for a photovoltaic assembly. The method includes the steps described below.

Multiple stages of photovoltaic assemblies are configured to be connected in series, and a superimposed voltage of output voltages of the multiple stages of photovoltaic assemblies superimposed on each other is provided to an inverter, where a loop is formed between the multiple stages of photovoltaic assemblies and the inverter.

A shutdown device is provided at an output end of each of the multiple stages of photovoltaic assemblies, where the shutdown device includes a shutdown module provided to the photovoltaic assembly, where the shutdown module includes a toggle switch for controlling whether the each stage of photovoltaic assembly is shut down and a controller for controlling whether the toggle switch to be turned on or off, where the controller is provided with a communication unit.

The controller operates the communication unit to continuously send a signal to a cable that serially connects the multiple stages of photovoltaic assemblies.

The controller monitors, through the communication unit, the signal returned from the cable.

The controller determines whether a degree of attenuation of the returned signal reaches a preset attenuation value.

In response to the degree of attenuation of the returned signal reaching the preset attenuation value, the controller turns off the toggle switch to shut down the photovoltaic assembly.

In a seventh aspect, an embodiment of the present application provides a shutdown device for a photovoltaic assembly. The shutdown device for a photovoltaic assembly includes a shutdown module provided to the photovoltaic assembly, where the shutdown module includes a voltage converter, a controller, and a communication unit.

The voltage converter is provided to the photovoltaic assembly, where the voltage converter is configured to perform a voltage conversion on an initial voltage outputted by the photovoltaic assembly and further configured to provide an output voltage.

The controller is configured to operate the voltage converter to perform the voltage conversion.

The communication unit is configured to load a signal generated by the communication unit onto a cable that serially connects multiple voltage converters and further configured to extract a returned signal from the cable.

The controller is further configured to operate the communication unit to send the signal onto the cable.

The controller is further configured to monitor, through the communication unit, the signal returned from the cable.

The controller is further configured to monitor a degree of attenuation of the returned signal; and the controller is further configured to, in response to the degree of attenuation of the returned signal reaching a preset attenuation value, lower the output voltage of the voltage converter.

### BRIEF DESCRIPTION OF DRAWINGS

Embodiments are described below in conjunction with drawings.
FIG. 1 is a schematic diagram illustrating that photovoltaic assemblies are connected in series into battery strings, the battery strings are connected in parallel to form a photovoltaic assembly array, and the photovoltaic assembly array supplies power to an inverter according to an embodiment of the present application.
FIG. 2 is a topological diagram illustrating that the photovoltaic assembly in FIG. 1 is provided with a shutdown module and a shutdown control module is disposed in an inverter loop.
FIG. 3 is a topological diagram of the shutdown module in FIG. 2 with a controller and a communication unit and a toggle switch.
FIG. 4 is a topological diagram of a power line carrier signal generated by the shutdown module of each stage of photovoltaic assembly and returned in FIG. 2.
FIG. 5 is a topological diagram illustrating that the shutdown module of each stage of photovoltaic assembly in FIG. 2 cannot receive a returned power line carrier signal.
FIG. 6 is a topological diagram illustrating that the shutdown module of each stage of photovoltaic assembly in FIG. 2 monitors power line carrier signals generated by other shutdown modules.
FIG. 7 is a topological diagram illustrating that the shutdown module of each stage of photovoltaic assembly in FIG. 2 cannot receive power line carrier signals of other shutdown modules.
FIG. 8 is a topological diagram illustrating the interference to the power line carrier signal by actively injecting an additional noise pulse on a cable in FIG. 2.
FIG. 9 is a topological diagram of absorbing part of power line carrier signals by a coupling device to attenuate the power line carrier signals in FIG. 2.
FIG. 10 is a topological diagram of shutting down a relay at a shutdown control module with the relay to attenuate a power line carrier signal in FIG. 2.
FIG. 11 is a topological diagram of adjusting an attenuator at a shutdown control module with a relay to attenuate a power line carrier signal in FIG. 2.
FIG. 12 is a topological diagram illustrating that signals are loaded onto a cable that serially connects multiple voltage converters and returned signals are extracted from the cable.

### DETAILED DESCRIPTION

Description is made in conjunction with multiple embodiments.

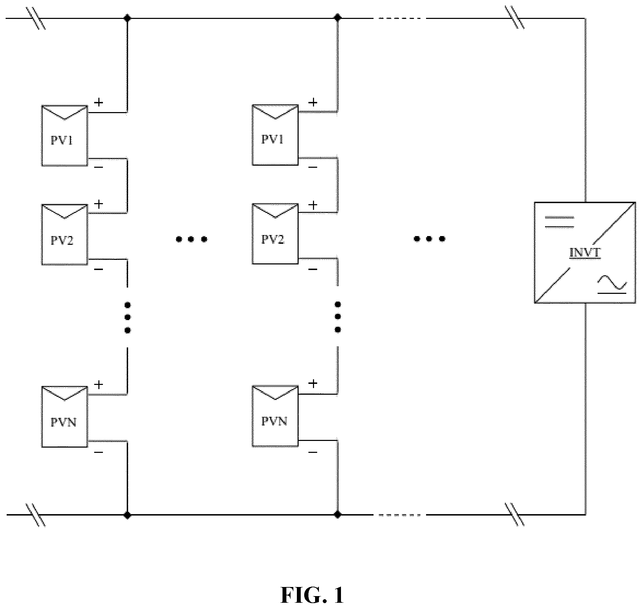

Referring to FIG. 1, as the environmental and traditional energy problems become more and more severe, attention is paid to photovoltaic power generation technology by more and more countries and regions, the photovoltaic power generation technology is considered as a priority development object, and photovoltaic power generation is one of the most mature and most developed scale power generation modes among new energy power generation technologies. Solar photovoltaic assemblies may be divided into a single-crystal silicon solar cell and a polycrystalline silicon solar cell, an amorphous silicon solar cell, and the like. A service life required by the silicon cell is generally up to more than twenty years, so the long-term and persistent management and control of photovoltaic assemblies are indispensable. It is well known that a number of factors contribute to the reduction of the power generation efficiency of the photovoltaic assemblies, such as manufacturing differences, installation differences, shadowing, or maximum power tracking adaptation between the photovoltaic assemblies. Shadowing is used as an example. If part of the photovoltaic assembly is blocked by clouds, buildings, shadows of trees, dirt, or the like, part of the assembly changes from a power supply to a load, no longer generates electrical energy, and consumes output power of other photovoltaic assemblies. Further, for example, when part of batteries in the same string of battery panels cannot generate electricity properly due to poor product consistency or shadowing, the efficiency loss of the entire battery string is severe, and when many arrays of battery panels are connected to an inverter, such as a centralized inverter, the battery panels of each string cannot operate at a maximum power point. The above are the causes of the loss of electrical energy and power generation. Since the local temperature of the photovoltaic assembly may be relatively high in the place where the hot spot effect occurs seriously, some even exceeding 150 °C, this leads to the burnout of local regions of the assembly, the formation of dark spots, the melting of welding spots, the aging of packaging materials, the glass bursting, the corrosion of welding strips, or other permanent damages, which may cause great potential hazards to the safety and reliability of the photovoltaic assembly. Therefore, the urgent problems to be solved in a photovoltaic system are the real-time management and control of the photovoltaic assembly and the management of the photovoltaic assembly. The actual requirement is that an operating state and operating parameters of each installed photovoltaic panel are managed and controlled in real time, abnormal conditions such as an abnormal voltage, an abnormal current, and abnormal temperature of the photovoltaic assembly are warned reliably, and some countermeasures are taken, which is very meaningful and necessary to take measures similar to assembly-level active safety shutdown or other emergency power-off measures on the abnormal battery assembly.

Referring to FIG. 1, FIG. 1 is a schematic diagram illustrating that photovoltaic assemblies are connected in series into battery strings, the battery strings are connected in parallel to form a photovoltaic assembly array, and the photovoltaic assembly array supplies power to an inverter. The photovoltaic assembly array is the basis for the conversion of light energy to electrical energy by a photovoltaic power generation system. A battery string is installed in the photovoltaic assembly array, and the battery string is composed of photovoltaic assemblies PV1 to PVN connected in series, where N is a positive integer. Total electrical energy provided by the photovoltaic assembly array is delivered by a direct current bus to a power source harvesting device or an energy harvesting device, where the power source harvesting device includes an inverter INVT for converting a direct current into an alternating current shown in FIG. 1 or includes a charger for charging a battery. Generally, a bypass diode connected in parallel with the photovoltaic assembly is connected between positive and negative electrodes of each photovoltaic assembly so that when output power of the photovoltaic assembly decreases, the photovoltaic assembly may be bypassed by the bypass diode matching the photovoltaic assembly, rather than letting the photovoltaic assembly with the decreased output power enter a negative pressure region, which would otherwise result in very high power dissipation at two ends of the photovoltaic assembly and even cause combustion.

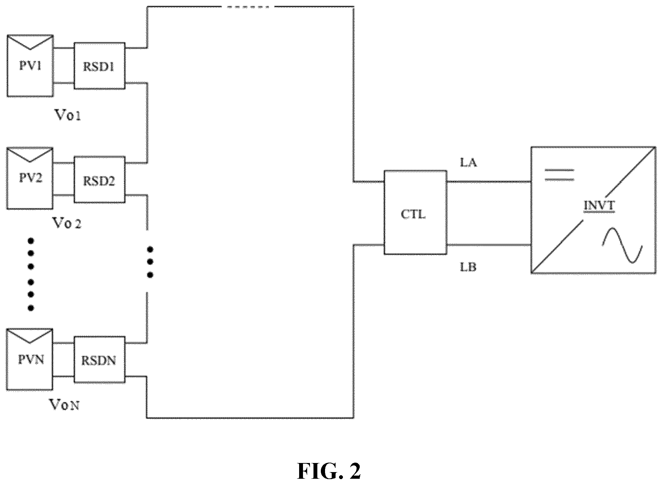

Referring to FIGS. 1 and 2, a shutdown device for a photovoltaic assembly includes a shutdown module provided to the photovoltaic assembly and further includes an inverter, a shutdown control module, and the like.

Referring to FIG. 2, FIG. 2 is a topological diagram illustrating that the photovoltaic assembly in FIG. 1 is provided with an assembly shutdown module RSDN and a shutdown control module CTL is disposed in an inverter loop. A shutdown state of, for example, a first stage of photovoltaic assembly PV1 in the battery string is managed by an assembly shutdown module RSD1 matching the first stage of photovoltaic assembly PV1, so as to perform a shutdown function. A shutdown state of a second stage of photovoltaic assembly PV2 is managed by a matched assembly shutdown module RSD2, so as to perform the shutdown function. By analogy, a shutdown state of an N-th stage of photovoltaic assembly PVN is managed by the shutdown module RSDN matching the N-th stage of photovoltaic assembly PVN, where N is a positive integer greater than or equal to 1.

Referring to FIG. 2, an output voltage of the first stage of photovoltaic assembly PV1 is Voi, an output voltage of the second stage of photovoltaic assembly PV2 is recorded as V_{O2}, and then the output voltage of the N-th stage of photovoltaic assembly PVN is V_{ON}, so that a total bus voltage on any photovoltaic cell string is approximately Voi + V_{O2} + ... + V_{ON} = V_{BUS} through calculation. Different sets of battery strings are connected in parallel between buses. Multiple stages of photovoltaic assemblies PV1 to PVN are connected in series, respective output voltages of the multiple stages of photovoltaic assemblies are superimposed on each other on the bus, and the bus voltage V_{BUS} is much higher than a voltage of a single photovoltaic assembly. The inverter INVT shown in FIG. 2 inverts the bus voltage V_{BUS} of a direct current into an alternating current from the bus.

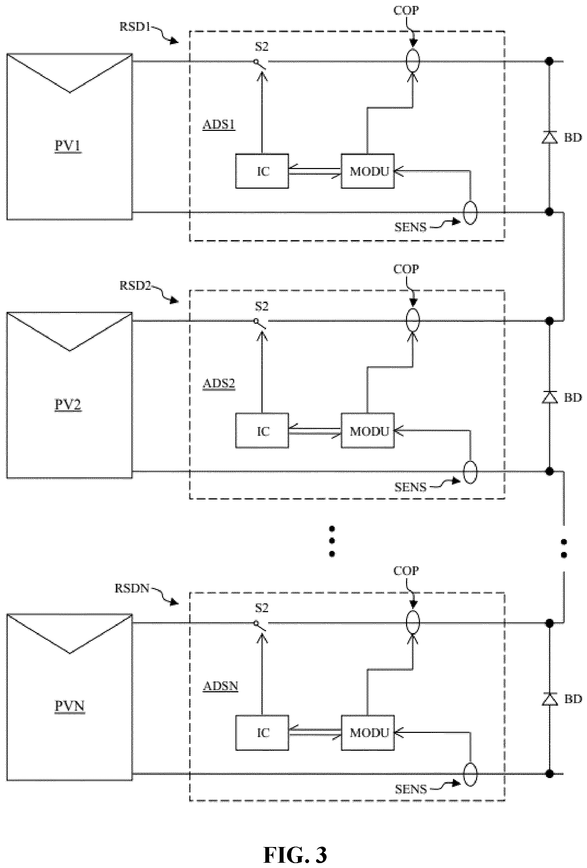

Referring to FIG. 3, the shutdown module RSDN includes a controller IC. In terms of achieving communication, the controller IC may perform one-way or two-way communication with an external device by controlling a matched communication unit MODU. A communication mechanism of the communication unit MODU includes two types, that is, wired communication and wireless communication. For example, wireless communication technologies such as WIFI, ZigBee, 433 MHz communication, infrared, or Bluetooth may be used. For example, power line carrier communication technology may be used. In an embodiment, the communication unit MODU includes a power line carrier modem configured to implement one-way or two-way communication in a form of a power line carrier. A coupling element COP shown in FIG. 3 couples a power line carrier signal emitted from the power line carrier modem to a cable. For example, the typical coupling element COP is a transformer with primary and secondary windings or a signal coupler with a coupling coil. The coupling transformer is used, for example, by delivering the power line carrier onto the primary winding, connecting the secondary winding onto a power supply cable as part of the cable, and delivering the power line carrier onto the cable by coupling of the primary and secondary windings. The signal coupler with a magnetic loop and the coupling coil is used, for example, by passing a bus cable directly through the magnetic loop, around which the coupling coil is wound, of the signal coupler, and delivering the power line carrier to the coupling coil so that the power line carrier may be induced from the bus cable, so as to implement non-contact signal transmission. To sum up, the coupling element COP may adopt the signal coupling technology disclosed in the related art, and the injection type inductive coupler technology, the cable clamp type inductive coupler technology, and the switchable full impedance matched cable clamp type inductive coupler may all be applied to embodiments of the present application. In addition to the power line carrier signal propagating along the cable in a direction away from the photovoltaic assembly, for example, towards the inverter, the power line carrier signal propagates in a reverse direction directly to the positive and negative electrodes of the photovoltaic assembly synchronously, after all the communication unit is closer to the photovoltaic assembly.

Referring to FIG. 3, the communication unit MODU, in addition to having the coupling element COP, is allowed to have a matched carrier signal coupling circuit SENS for sensing the power line carrier signal from the cable, where the carrier signal coupling circuit SENS may be abbreviated as the coupling circuit SENS. The former coupling element COP sends and loads the power line carrier signal to the cable at the shutdown module of the photovoltaic assembly, and the latter carrier signal coupling circuit SENS senses and captures the power line carrier signal returned from the cable to the shutdown module of the photovoltaic assembly. The coupling circuit SENS is, for example, a transformer with primary and secondary windings or a signal coupler with a coupling coil. The coupling circuit SENS is also, for example, any one of a Rogowski hollow coil sensor, a high-frequency sensor, a codec, or a shunt. The coupling circuit SENS is configured to detect and monitor the power line carrier signal returned to the shutdown module of the photovoltaic assembly on the transmission cable.

Spread spectrum communication is a spread spectrum communication technology, and the basic feature is that a signal bandwidth occupied by the transmitted information is much greater than a bandwidth of the information. In addition, the spread spectrum communication also has the following features: the spread spectrum communication is a digital transmission mode, broadening of a signal bandwidth at a sending end is achieved by modulating transmission information through a pseudo-random code with a high code rate, and at a receiving end, the same pseudo-random code is used to perform relevant demodulation on a spread spectrum signal so as to recover the transmitted information. A theoretical basis of the spread spectrum communication is the famous theorem about channel capacity in information theory, that is, the Shannon formula: the signal bandwidth and a signal-to-noise ratio are interchangeable when a transmission rate of the signal is constant, that is, the requirement for the signal-to-noise ratio is reduced by increasing the signal bandwidth. As the bandwidth increases to a certain extent, signal power may approach noise power, and communication can be maintained even if the signal is submerged by noise. The benefit of the spread spectrum communication is to replace the signal-to-noise ratio with broadband transmission technology, which is the basic idea and theoretical basis of the spread spectrum communication.

The spread spectrum communication technology, amplitude modulation technology, frequency shift keying, orthogonal frequency division, and other adjustment manners are applicable to the power line carrier communication. Although the amplitude modulation is difficult to ensure reliable communication, a noise pulse additionally added to the cable in the embodiments of the present application can easily interfere with the power line carrier signal under the amplitude modulation and enable a specified parameter unable to satisfy a preset feature. Therefore, the amplitude modulation is a preferred option when the power line carrier signal is interfered by actively injecting the additional noise pulse on the cable. The frequency shift keying is applicable to power line narrowband communication, and the orthogonal frequency division is applicable to power line broadband communication. In addition, the spread spectrum communication is applied in both the power line narrowband communication and the power line broadband communication. The related art may be used in modulation and demodulation of the power line carrier communication.

Referring to FIG. 3, in the shutdown module supporting rapid shutdown management of the photovoltaic assembly, the assembly shutdown module RSDN in FIG. 3 for controlling whether the photovoltaic assembly is shut down is used as an example. An expected intelligent management goal of a circuit using the shutdown module RSDN is to determine whether it is necessary to shut down the photovoltaic assembly in time to satisfy the NEC690.12 clause. The NEC690.12 clause: the photovoltaic system installed or built into buildings must have a rapid shutdown feature so as to reduce the risk of electrical shock to emergency personnel. In this embodiment, the case where a management module is the shutdown module implementing the shutdown function is used as an example. In fact, the shutdown module may have functions other than a data monitoring function or an assembly shutdown function. For example, each photovoltaic assembly in the multiple stages of photovoltaic assemblies PV1 to PVN is provided with one voltage converter, and at the same time, output voltages of multiple voltage converters corresponding to the multiple stages of photovoltaic assemblies PV1 to PVN may be superimposed on each other on a direct current bus and the superimposed voltage is used as a bus voltage. In this case, the multiple voltage converters are connected in series. Each voltage converter extracts electrical energy from one photovoltaic assembly corresponding to each voltage converter and converts the electrical energy into its own output power. Each voltage converter is further configured to perform a boost operation, a buck operation, or a buck-boost operation on the output voltage of one photovoltaic assembly corresponding to each voltage converter and output the processed voltage. In an embodiment, each voltage converter is further used for setting an output current and an output voltage of one photovoltaic assembly corresponding to each voltage converter at a maximum power point, thereby optimizing power of the photovoltaic assembly. The controller IC in the management module may be used for operating the voltage converter to perform a voltage conversion such as a boost operation, a buck operation, or a buck-boost operation so that the shutdown module may also have a voltage regulation function and a power management function.

Referring to FIG. 3, in an embodiment, the shutdown module RSD1 supporting the rapid shutdown of the photovoltaic assembly PV1 is configured to operate a toggle switch S2 configured corresponding to the photovoltaic assembly PV1 to be turned off or on to control whether to shut down the photovoltaic assembly PV1. At the same time, using another embodiment as a comparison, in another embodiment, the shutdown module RSD2 supporting the rapid shutdown of the photovoltaic assembly PV2 is configured to operate the toggle switch S2 configured for the photovoltaic assembly PV2 to be turned off or on to control whether to shut down the photovoltaic assembly PV2. By analogy, in other embodiments, the shutdown module RSDN supporting the rapid shutdown of the photovoltaic assembly PVN is configured to operate the toggle switch S2 configured for the photovoltaic assembly PVN to be turned off or on to control whether to shut down the photovoltaic assembly PVN.

Referring to FIG. 3, in an embodiment, the photovoltaic assembly PV1 is connected to the cable, that is, the power supply cable, through the toggle switch S2, and the toggle switch S2 is controlled by the controller IC. If the toggle switch S2 is turned off, the photovoltaic assembly PV1 is removed from the multiple stages of photovoltaic assemblies PV1 to PVN connected in series, that is, the battery string. If the toggle switch S2 is turned on, the photovoltaic assembly PV1 resumes access to the photovoltaic assemblies PV1 to PVN, that is, the battery string. The photovoltaic assembly PV2 is connected to the power supply cable, through the toggle switch S2, and the toggle switch S2 is controlled by the controller IC. If the toggle switch S2 is turned off, the photovoltaic assembly PV2 is removed from the multiple stages of photovoltaic assemblies PV1 to PVN connected in series, that is, the battery string. If the toggle switch S2 is turned on, the photovoltaic assembly PV2 resumes access to the photovoltaic assemblies PV1 to PVN, that is, the battery string. The photovoltaic assembly PVN is connected to the power supply cable, through the toggle switch S2, and the toggle switch S2 is controlled by the controller IC. If the toggle switch S2 is turned off, the photovoltaic assembly PVN is removed from the multiple stages of photovoltaic assemblies PV1 to PVN connected in series, that is, the battery string. If the toggle switch S2 is turned on, the photovoltaic assembly PVN resumes access to the photovoltaic assemblies PV1 to PVN, that is, the battery string. Therefore, in the case where the shutdown module controls whether to shut down the photovoltaic assembly, each photovoltaic assembly is provided with one corresponding toggle switch S2, and the photovoltaic assemblies PV1 to PVN are connected in series to form the battery string. Each toggle switch S2 is used for turning off one photovoltaic assembly corresponding to each toggle switch S2 and removing the one photovoltaic assembly from the battery string. Each toggle switch S2 is further used for resuming one photovoltaic assembly corresponding to each toggle switch S2 from a shutdown state into an access to the battery string. The toggle switch S2 configured for each photovoltaic assembly is controlled by the controller IC in the shutdown module configured for each photovoltaic assembly.

In an embodiment, a bypass diode BD connected in parallel with the photovoltaic assembly may be provided so that when the photovoltaic assembly is removed from the battery string, the photovoltaic assembly may be bypassed by the matched bypass diode BD, thereby preventing a trip point from being formed at the removed photovoltaic assembly in the battery string. Therefore, assuming that the photovoltaic assembly PVN is removed from the battery string, the photovoltaic assembly PVN is bypassed by the matched bypass diode BD.

Referring to FIG. 3, in an embodiment, if the photovoltaic assemblies PV1 to PVN are all shut down, the total bus voltage across the battery string, that is, V_{O1} + V_{O2} + ... + V_{ON} = V_{BUS}, may quickly fall from hundreds of volts to near zero, allowing the photovoltaic system to implement the rapid shutdown function, reducing the risk of electrical shock to emergency personnel, and satisfying the NEC690.12 clause.

Referring to FIG. 3, in an embodiment, the shutdown module RSDN for the rapid shutdown of the photovoltaic assembly includes the toggle switch S2 provided to the photovoltaic assembly PVN, where the toggle switch S2 is configured to control whether to shut down the photovoltaic assembly PVN. The shutdown module RSDN further includes the controller IC for controlling the toggle switch S2 to be turned on or off. The shutdown module RSDN includes the communication unit MODU, where the communication unit MODU is configured to load the power line carrier signal generated by the communication unit MODU onto the cable that serially connects the multiple stages of photovoltaic assemblies PV1 to PVN and extract the power line carrier signal returned to the local shutdown module RSDN from the cable. The controller IC operates the communication unit MODU to continuously send the power line carrier signal having the preset feature onto the cable, and the controller IC continuously monitors, through the communication unit MODU, the power line carrier signal returned from the cable to the local shutdown module RSDN. The preset feature may be a signal feature. The coupling element COP may couple the power line carrier signal emitted from the power line carrier modem to the cable, the controller IC may transmit data information to be sent out to the communication unit MODU, and then the communication unit MODU modulates the data information and couples the data information to the cable through the power line carrier signal, so as to implement a function of sending the data information. In addition, the coupling circuit SENS may sense and capture the power line carrier signal returned from the cable to the shutdown module RSDN of the photovoltaic assembly, and transmit the power line carrier signal sensed and extracted to the communication unit MODU, and the communication unit MODU decodes the data information from the power line carrier carrying the data information and sends the data information to the controller IC, so as to implement a function of receiving the data information. In the embodiments of the present application, to facilitate the explanation of the division of the coupling circuit SENS and the coupling element COP into two parts, essentially both of which are sometimes allowed to be integrated directly together as a whole, the coupling circuit SENS and the coupling element COP are collectively referred to as a signal coupler, and the coupling circuit SENS and the coupling element COP are key units for coupling a carrier communication unit with a power line, that is, a cable.

Referring to FIG. 3, in an embodiment, the communication unit MODU loads a signal onto the cable that serially connects the multiple stages of photovoltaic assemblies and extracts a returned signal from the cable, the controller IC operates the communication unit MODU to continuously send the signal onto the cable, the controller IC continuously monitors, through the communication unit MODU, the signal returned from the cable, the controller IC also monitors a degree of attenuation of the returned signal, and the degree of attenuation is used as a trigger condition for whether to shut down the photovoltaic assembly. If the degree of attenuation of the returned signal reaches a preset attenuation value, the toggle switch S2 is turned off so as to shut down the photovoltaic assembly, for example, the photovoltaic assembly PVN. A unit of the attenuation value is generally decibels.

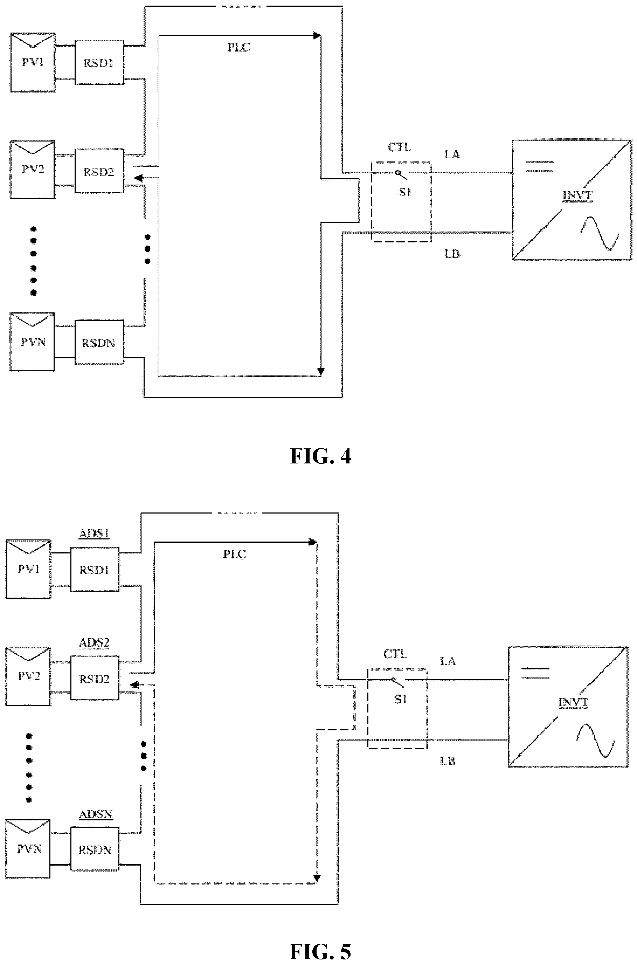

Referring to FIG. 4, in an embodiment, it is assumed that the shutdown module RSD2 of the photovoltaic assembly PV2 couples and loads a power line carrier signal PLC emitted from the communication unit onto a positive bus LA, and the power line carrier signal PLC is transmitted to the inverter INVT along the bus and then returned to the multiple stages of photovoltaic assemblies PV1 to PVN along a negative bus LB, where a physical carrier constituting the bus is a conductive cable. Respective output voltages of the multiple stages of photovoltaic assemblies PV1 to PVN are superimposed on each other and provided to the inverter INVT, a loop is formed between the multiple stages of photovoltaic assemblies PV1 to PVN and the inverter INVT connected in series, and the power line carrier signal sent by the shutdown module of each stage of photovoltaic assembly is transmitted to the inverter INVT and then returned to the multiple stages of photovoltaic assemblies along the loop. For example, the power line carrier signal PLC sent by the shutdown module RSD2 is transmitted to the inverter INVT and then returned to the multiple stages of photovoltaic assemblies PV1 to PVN along the loop. The power line carrier signal PLC is typically transmitted to the inverter through the positive bus LA and then returned along the negative bus LB, and the power line carrier signal PLC may also be transmitted to the inverter through the negative bus LB and then returned along the positive bus LA. Therefore, a returned power line carrier signal is defined as a power line carrier signal that propagates into the loop and then returns or folds back, and a power line carrier signal that does not propagate into the loop but is sensed by the shutdown module cannot be referred to as the returned power line carrier signal. Not only the power line carrier signal PLC emitted from the communication unit in the shutdown module RSD2 propagates remotely in a direction away from the photovoltaic assemblies PV1 to PVN, that is, propagates remotely in a direction towards the inverter, but also the power line carrier signal PLC is reversely dispersed to the positive and negative electrodes of the photovoltaic assembly synchronously, after all the communication unit in the shutdown module RSD2 is closer to the photovoltaic assembly. The power line carrier signal PLC propagated remotely in the direction towawrds the inverter and then folds back is the returned power line carrier signal, and the power line carrier signal PLC dispersed locally in the photovoltaic assembly but not entering the loop is not the returned power line carrier signal. The power line carrier signal PLC propagating only locally in the assembly but not entering the loop has a negative influence on the determination of whether to shut down the photovoltaic assembly.

Referring to FIG. 4, the controller IC in the shutdown module RSD2 extracts, through the matched communication unit MODU, the returned power line carrier signal PLC from the cable, and the controller IC monitors whether the specified parameter of the returned power line carrier signal PLC satisfies the preset feature. If the specified parameter does not satisfy the preset feature, or the controller IC does not receive the power line carrier signal PLC within a set period of time, the controller IC turns off the toggle switch S2 to shut down the photovoltaic assembly PV2.

Referring to FIG. 4, a carrier object monitored by the controller IC in the shutdown module RSD2: the power line carrier signal PLC returned through the loop is generated by the controller IC in the shutdown module RSD2 operating the matched communication unit MODU. Therefore, in an embodiment, the controller IC in the shutdown module RSD2 operates the communication unit MODU to continuously send the power line carrier signal PLC having the preset feature onto the cable, the controller IC in the shutdown module RSD2 continuously monitors, through the communication unit MODU, the power line carrier signal PLC returned from the cable, and the returned power line carrier signal PLC is generated by the shutdown module RSD2.

Referring to FIG. 4, in an embodiment, the specified parameter of the power line carrier signal PLC includes an amplitude magnitude of the power line carrier signal PLC, the preset feature includes a preset amplitude value, and the photovoltaic assembly PV2 is shut down when an actual amplitude magnitude of the received returned power line carrier signal PLC is less than the preset amplitude value.

Referring to FIG. 4, in an embodiment, the specified parameter of the power line carrier signal PLC includes a spectral distribution of the power line carrier signal PLC in a frequency domain, the preset feature includes a preset spectral distribution point, and the photovoltaic assembly PV2 is shut down in the case where an actual spectral distribution of the returned power line carrier signal PLC does not match the preset spectral distribution point and a missed spectral distribution point exists. It can thus be seen that parameter categories of the preset feature are not unique.

Referring to FIG. 4, in an embodiment, the communication unit MODU in the shutdown module RSD2 loads a signal onto the cable that serially connects the photovoltaic assemblies and extracts a returned signal from the cable, the controller IC operates the communication unit MODU to continuously send the signal onto the cable, the controller IC continuously monitors, through the communication unit MODU, the signal returned from the cable, the controller IC also monitors a degree of attenuation of the returned signal, and the degree of attenuation is used as a trigger condition for whether to shut down the photovoltaic assembly. If the degree of attenuation of the returned signal reaches a preset attenuation value, the shutdown module RSD2 turns off the toggle switch S2 to shut down the photovoltaic assembly, for example, the photovoltaic assembly PV2. This embodiment may enable autonomous transmission and receiving of the shutdown module.

Referring to FIG. 5, in an embodiment, a shutdown control module CTL is provided in the loop, where the shutdown control module CTL is provided with a master switch S 1 connected to the cable, where the master switch S 1 may be provided on the positive bus or the negative bus. The shutdown control module CTL may be on the cable between the photovoltaic assemblies PV1 to PVN and the inverter INVT, and the shutdown control module CTL may be remote from the photovoltaic assemblies PV1 to PVN so as to ensure safety. The photovoltaic system installed with the voltage converter or the intelligent control shutdown device can cut off the connection between each assembly in emergency, eliminate the direct current high voltage existing in the array, and achieve the rapid assembly-level shutdown, thereby ensuring the safety of property and life. The emergency personnel turns off the master switch S 1 in the shutdown control module CTL or quickly toggles the master switch S1, for example, performs a toggling operation of turning off and then turning on and then turning off the master switch S 1 so that the specified parameter of the returned power line carrier signal PLC cannot satisfy the preset feature. For example, the actual amplitude magnitude of the returned power line carrier signal is less than the preset amplitude value. For example, the actual spectral distribution of the returned power line carrier signal does not match the preset spectral distribution point. If the emergency personnel turns off the master switch S 1 in the shutdown control module CTL so that a propagation path of the power line carrier signal PLC on the cable is directly turned off, and thus the controller IC cannot receive the returned power line carrier signal PLC since the propagation path of the carrier in the loop is directly cut off. The controller IC does not receive the power line carrier signal PLC within a set period of time during which it is likely that the emergency personnel turns off the master switch, so it is now determined that the toggle switch S 1 may be turned off so as to shut down the photovoltaic assembly PV2. A dashed line in FIG. 5 indicates that the specified parameter of the returned power line carrier signal is changed after human intervention.

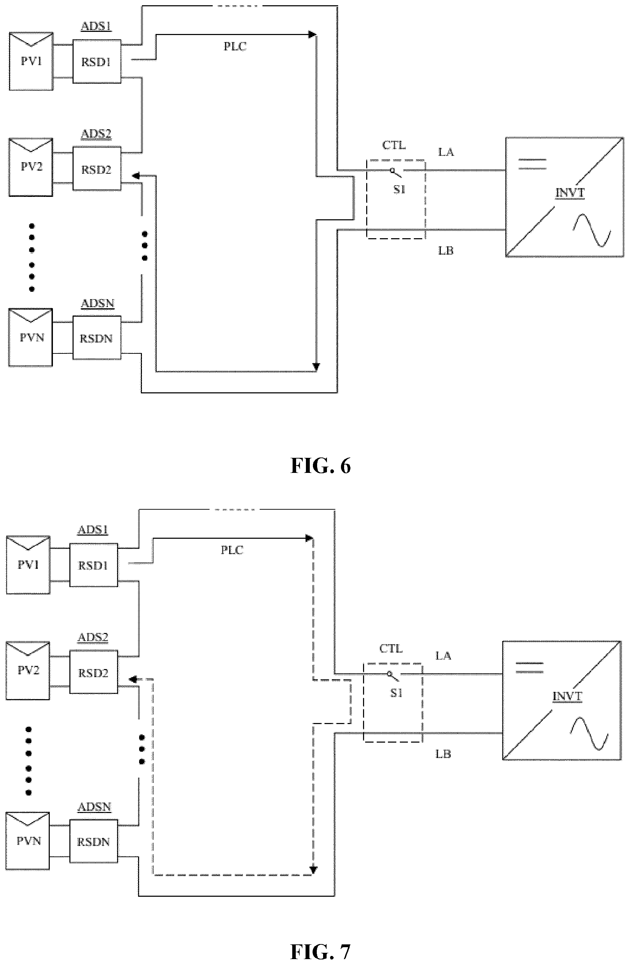

Referring to FIG. 6, the controller IC in the shutdown module RSD2 extracts, through the matched communication unit MODU, the returned power line carrier signal PLC from the cable, and the controller IC monitors whether the specified parameter of the returned power line carrier signal PLC satisfies the preset feature. If the specified parameter does not satisfy the preset feature, or the controller IC does not receive the power line carrier signal PLC within a set period of time, the controller IC turns off the toggle switch S2 to shut down the photovoltaic assembly PV2.

Referring to FIG. 6, a carrier object monitored by the controller IC in the shutdown module RSD2: the power line carrier signal PLC returned through the loop is generated by the controller IC in the shutdown module RSD1 operating the matched communication unit MODU. Therefore, in an embodiment, the controller IC in the shutdown module RSD1 operates the communication unit MODU to continuously send the power line carrier signal PLC having the preset feature onto the cable, the controller IC in the shutdown module RSD2 continuously monitors, through the matched communication unit MODU, the power line carrier signal PLC returned from the cable, and the returned power line carrier signal PLC is generated by the shutdown module RSD1.

Referring to FIG. 5, each shutdown module has address number information burned in advance: address number information of the shutdown module RSD1 matching the photovoltaic assembly PV1 burnt to the matched controller IC is ADS1, address number information of the shutdown module RSD2 matching the photovoltaic assembly PV2 burnt to the matched controller IC is ADS2, and address number information of the shutdown module RSD3 matching the photovoltaic assembly PV3 burnt to the matched controller IC is ADS3. Address number information of the shutdown module RSDN matching the assembly PVN burnt to the matched controller IC is ADSN.

Referring to FIG. 5, through monitoring the power line carrier signal generated by the shutdown module and returned, the shutdown module of any stage of photovoltaic assembly determines whether the stage of photovoltaic assembly is shut down. Through monitoring the power line carrier signal PLC generated by the shutdown module RSD2 and returned through the loop, the shutdown module RSD2 of the photovoltaic assembly PV2 determines whether the corresponding photovoltaic assembly PV2 needs to be shut down.

In another embodiment, the power line carrier signal emitted from the shutdown module RSD2 carries the address number information, such as ADS2, and the shutdown module RSD2 is limited to only extract and monitor the power line carrier signal matching its own address number information ADS2.This limitation may not be used.

Referring to FIG. 6, through monitoring power line carrier signals generated by shutdown modules of other photovoltaic assemblies and returned, the shutdown module of any stage of photovoltaic assembly determines whether the any stage of photovoltaic assembly is shut down.

For example, through monitoring the power line carrier signal PLC generated by the shutdown module RSD1 and returned through the loop, the shutdown module RSD2 determines whether the corresponding photovoltaic assembly PV2 needs to be shut down. In another embodiment, the power line carrier signal emitted from the shutdown module RSD1 carries the address number information, such as ADS1, and the shutdown module RSD2 is allowed to only extract and monitor the power line carrier signal matching the address number information ADS1 of the shutdown module RSD1. This embodiment is also optional but not necessary, and setting an address number is not necessary. Any shutdown module monitors the power line carrier signal generated by the shutdown module itself and returned or monitors the power line carrier signals generated by other shutdown modules and returned.

Referring to FIG. 6, in an embodiment, the communication unit MODU in the shutdown module RSD1 loads the signal onto the cable that serially connects the photovoltaic assemblies, and extracts the returned signal from the cable, and the controller IC operates the communication unit MODU to continuously send the signal onto the cable. The controller IC in the shutdown module RSD2 continuously monitors, through the communication unit MODU, the signal returned from the cable and also monitors a degree of attenuation of the returned signal. If the degree of attenuation of the returned signal reaches the preset attenuation value, the shutdown module RSD2 turns off the toggle switch S2 to shut down the photovoltaic assembly, so as to rapidly shut down, for example, the photovoltaic assembly PV2. This embodiment enables monitoring of signals from other shutdown modules.

Referring to FIG. 7, in an embodiment, through monitoring the power line carrier signal PLC generated by the shutdown module RSD1 and returned through the loop, the shutdown module RSD2 matching the photovoltaic assembly PV2 determines whether the corresponding photovoltaic assembly PV2 needs to be shut down. Similarly, the emergency personnel turns off the master switch in the shutdown control module CTL or quickly toggles the master switch S1, for example, performs a toggling operation of turning off and then turning on and then turning off the master switch S 1 so that the specified parameter of the returned power line carrier signal PLC cannot satisfy the preset feature. For example, the actual amplitude magnitude of the returned power line carrier signal is less than the preset amplitude value. For example, the actual spectral distribution of the returned power line carrier signal does not match the preset spectral distribution point. For example, the degree of attenuation of the returned signal, for example, the returned power line carrier signal, reaches the preset attenuation value. If the emergency personnel turns off the master switch in the shutdown control module CTL so that the propagation path of the power line carrier signal PLC on the cable is directly turned off, and thus the shutdown module RSD2 cannot receive the returned power line carrier signal PLC since the propagation path of the carrier in the loop is directly cut off. The controller IC does not receive the power line carrier signal PLC within a set period of time during which it is likely that the emergency personnel turns off the master switch, so it is now determined that the toggle switch S 1 may be turned off so as to shut down the photovoltaic assembly PV2. A dashed line in FIG. 7 indicates that the specified parameter of the returned power line carrier signal is changed after human intervention.

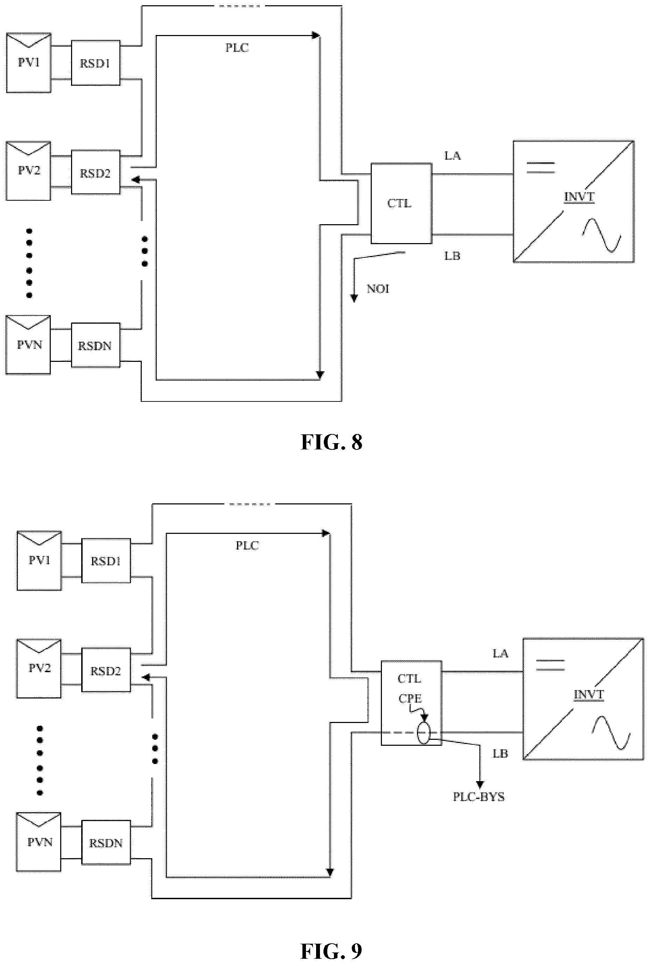

Referring to FIG. 8, in an embodiment, the shutdown control module CTL contains a noise source that can generate a noise pulse NOI, and a frequency of the noise pulse NOI of the noise source preferably falls within a frequency range of the power line carrier signal PLC. The power line carrier signal PLC is interfered on the cable by actively injecting the noise pulse NOI. A noise generation source is not drawn in the figure, and the noise pulse NOI generated by the noise source may cause the specified parameter to fail to satisfy the preset feature. The noise pulse NOI is injected onto the cable. For example, the noise is introduced on the cable at the shutdown control module CTL through manual control. For example, the actual amplitude magnitude of the returned power line carrier signal is less than the preset amplitude value. For example, the actual spectral distribution of the returned power line carrier signal does not match the preset spectral distribution point. For example, the degree of attenuation of the returned signal, for example, the returned power line carrier signal, reaches the preset attenuation value. Noise synchronized with a grid voltage frequency of about 50 Hz to 60 Hz is generally generated by a switching device operating at a power frequency. For example, noise is generated by a silicon controlled rectifier (SCR) switching device, where each subharmonic of the noise has a frequency of about 50 Hz. As another example, an interference noise generated by an electric motor is an interference with a smooth power spectrum generated by the load and the grid being out of synchronization, belonging to white noise. Impulse noise is caused by sudden switching of electrical appliances or noise induced from high-voltage transmission transformers and is characterized by a wide spectrum and a short time.

Referring to FIG. 9, in an embodiment, the shutdown control module CTL includes a coupling device CPE that may absorb part of the power line carrier signal to attenuate the power line carrier signal PLC, where the coupling device CPE is, for example, a capacitor or a transformer or a magnetic loop wound with a coil and sleeved on the cable. Without interfering with the power line carrier signal PLC, the coupling device CPE is disabled, so as to prevent the power line carrier signal PLC from being attenuated. If an attempt is made to interfere with the power line carrier signal PLC and to attenuate the power line carrier signal PLC, the coupling device CPE is introduced to the cable and absorbs at least part of the power line carrier signal PLC from the cable. The absorbed part of the power line carrier signal may be introduced to the ground, for example, through a carrier shunt path PLC-BYS shown in FIG. 9, or consumed directly using a resistor or other loads. To sum up, the coupling device CPE is used on the cable to absorb part of the power line carrier signal so as to attenuate the power line carrier signal so that the specified parameter cannot satisfy the preset feature. For example, the actual amplitude magnitude of the returned power line carrier signal is less than the preset amplitude value. For example, the actual spectral distribution of the returned power line carrier signal does not match the preset spectral distribution point. For example, the degree of attenuation of the returned signal, for example, the returned power line carrier signal reaches the preset attenuation value. All power line carrier signals PLC may even be absorbed so that the shutdown module RSD2 cannot receive the returned power line carrier signal PLC, and in this case, the shutdown module RSD2 is equivalent to shutting down the photovoltaic assembly PV2 if not receiving the power line carrier signal within a set period of time.

Referring to FIG. 4, in an embodiment, in conjunction with FIGS. 5 to 9, after the photovoltaic assembly is successfully shut down, in some scenarios, for example, the alarm disappears, the photovoltaic assembly may need to be re-enabled. Assuming that the shutdown control module CTL is further provided with the controller and the communication unit like the shutdown module, the shutdown control module CTL can actively send the power line carrier signal to shutdown modules RSD1 to RSDN. A mode of re-enabling the photovoltaic assemblies PV1 to PVN that are shut down is as follows: a power line carrier signal carrying an enabling instruction is sent to each shutdown module, respective controllers IC of the shutdown modules RSD 1 to RSDN receive enabling instructions through matched communication units MODU, and the respective controllers IC of the shutdown modules RSD1 to RSDN turn on toggle switches S2 in response to the enabling instructions, so as to resume the photovoltaic assemblies PV1 to PVN to on states.

Referring to FIG. 4, in an embodiment, in conjunction with FIGS. 5 to 9, a carrier object monitored by the controller IC of the shutdown module RSD2: the power line carrier signal PLC returned through the loop is generated by the controller IC of the shutdown module RSD2 operating the matched communication unit MODU. When the controller IC continuously monitors, through the communication unit MODU, the power line carrier signal PLC returned from the cable, it may be specified that only if the attenuation of the power line carrier signal PLC returned from the cable exceeds a predefined preset attenuation value, the controller IC continues to determine whether the specified parameter of the received power line carrier signal satisfies the preset feature, or the controller IC continues to determine whether the returned power line carrier signal PLC is not received within a set period of time. If the attenuation of the power line carrier signal PLC returned from the cable is less than or equal to the predefined preset attenuation value, the controller IC does not determine whether the specified parameter of the received power line carrier signal satisfies the preset feature, or the controller IC does not determine whether the returned power line carrier signal PLC is not received within a set period of time, and the photovoltaic assembly PV2 is not turned off. In this embodiment, the returned power line carrier signal PLC is allowed to be generated by the shutdown module RSD2. Therefore, in an embodiment, it may be required that on the premise that the attenuation of the power line carrier signal PLC returned from the cable exceeds the preset attenuation value, the controller IC monitors whether the specified parameter of the received power line carrier signal satisfies the preset feature, or the controller IC determines whether the power line carrier signal is received within a set period of time. If the specified parameter does not satisfy the preset feature, or the controller does not receive the power line carrier signal within a set period of time, the photovoltaic assembly is turned off. In this manner, it is feasible to avoid false turn-off or false turn-on. In addition, with regard to the determination of the attenuation of the power line carrier signal, a signal feature of an initial power line carrier signal emitted from the shutdown module may be acquired first, and the returned power line carrier signal is compared with the initial power line carrier signal, so as to obtain an accurate attenuation result.

Referring to FIG. 6, in an embodiment, in conjunction with FIGS. 5 to 9, a carrier object monitored by the controller IC of the shutdown module RSD2: the power line carrier signal PLC returned through the loop is generated by the controller IC of the shutdown module RSD 1 operating the matched communication unit MODU. When the controller IC continuously monitors, through the communication unit MODU, the power line carrier signal PLC returned from the cable, it may be specified that only if the attenuation of the power line carrier signal PLC returned from the cable exceeds a predefined preset attenuation value, the controller IC continues to determine whether the specified parameter of the received power line carrier signal satisfies the preset feature, or the controller IC continues to determine whether the returned power line carrier signal PLC is not received within a set period of time. If the attenuation of the power line carrier signal PLC returned from the cable is less than or equal to the predefined preset attenuation value, the controller IC does not determine whether the specified parameter of the received power line carrier signal satisfies the preset feature, or the controller IC does not determine whether the returned power line carrier signal PLC is not received within a set period of time, and the photovoltaic assembly PV2 is not turned off. In this embodiment, the returned power line carrier signal PLC is allowed to be generated by the shutdown module RSD 1. Therefore, in an embodiment, it may be required that on the premise that the attenuation of the power line carrier signal PLC returned from the cable exceeds the preset attenuation value, the controller IC monitors whether the specified parameter of the received power line carrier signal satisfies the preset feature, or the controller IC determines whether the power line carrier signal is received within a set period of time. If the specified parameter does not satisfy the preset feature, or the controller does not receive the power line carrier signal within a set period of time, the photovoltaic assembly is shut down. In this manner, it is feasible to avoid false turn-off or false turn-on. In addition, with regard to the determination of the attenuation of the power line carrier signal, a signal feature of an initial power line carrier signal emitted from the shutdown module may be acquired first, and the returned power line carrier signal is compared with the initial power line carrier signal, so as to obtain an accurate attenuation result. In addition, the voltage and current outputted by the photovoltaic assembly are affected by integrated factors, such as an intensity of illumination radiation, ambient temperature, whether to be blocked, a degree of blocking, and an aging state of the photovoltaic assembly, and these integrated factors are dynamically changed from time to time. The instability of the voltage and current of a transmission channel of the power line carrier signal or periodic signal or aperiodic signal and the natural noise mixed in the channel enable it difficult for the shutdown module to distinguish the natural noise and an external signal so that it is difficult to calculate the signal attenuation. That the shutdown module monitors the signal generated by the shutdown module and returned or monitors signals generated by other shutdown modules and returned is a preferred processing manner, by which an error rate of the signal attenuation may be reduced to a minimum level, that is, equivalent to reducing a false turn-off rate or false turn-on rate of the photovoltaic assembly.

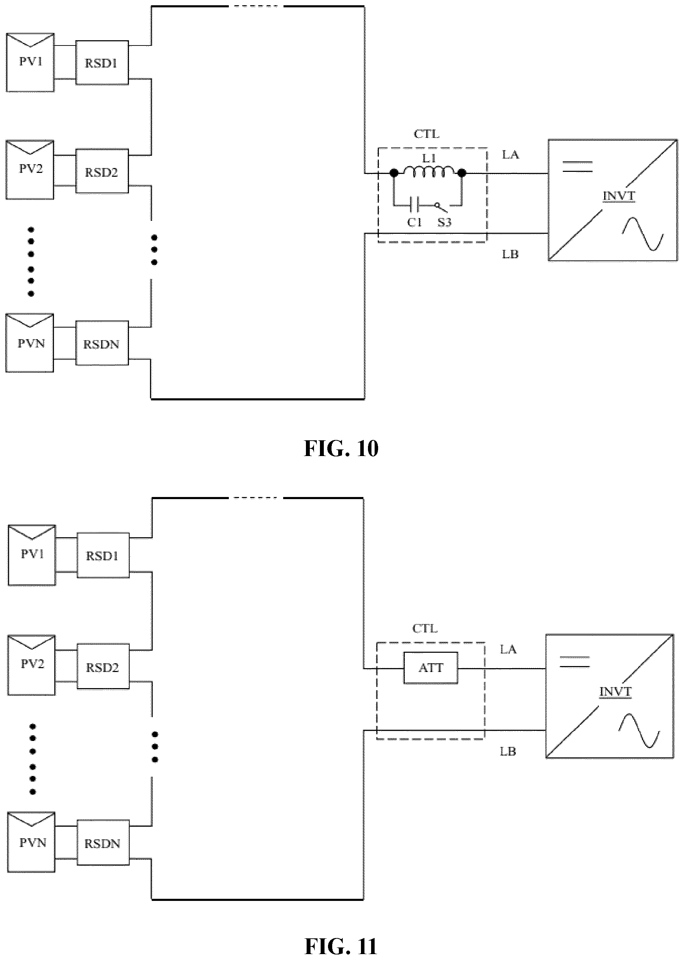

Referring to FIG. 6, in an embodiment, in conjunction with FIGS. 4 to 9, a corresponding processing manner of providing the shutdown control module CTL in the loop and shutting down the photovoltaic assemblies PV1 to PVN at the shutdown control module CTL is adjusting impedance in the loop, thereby changing the degree of attenuation of the power line carrier signal PLC in the loop, so that the specified parameter cannot satisfy the preset feature. For example, it is allowed to adjust an impedance value in the loop to a greater extent so that the power line carrier signal PLC has a greater attenuation. In another embodiment, the loop impedance may be changed by introducing a capacitor, a resistor, and an inductor on the cable at the shutdown control module CTL, and the loop impedance may be changed by removing these impedance-influencing electronic components, that is, the capacitor, the resistor, and the inductor, from the cable. FIGS. 10 and 11 below describe the regulation of the impedance in the loop.

Referring to FIG. 6, in an embodiment, it may be specified that the controller IC of the first or first stage of photovoltaic assembly PV1 in the multiple stages of photovoltaic assemblies PV1 to PVN operates the communication unit to continuously send the power line carrier signal, and at the same time, it may be specified that the controllers IC of the multiple stages of photovoltaic assemblies PV1 to PVN continuously monitor, through the communication units, the power line carrier signals returned from the cable. If the controllers of the photovoltaic assemblies PV1 to PVN monitor that the specified parameters of the returned power line carrier signals do not satisfy the preset feature, or the controllers of the photovoltaic assemblies PV1 to PVN do not receive the power line carrier signal within a set period of time, the photovoltaic assemblies PV1 to PVN turn off respective toggle switches S2 to turn off the assemblies PV1 to PVN. The power line carrier signal emitted from the communication unit operated by the controller IC of the first stage of photovoltaic assembly PV1 may be propagated to the inverter through the positive bus and then transmitted back to the multiple stages of photovoltaic assemblies PV1 to PVN through the negative bus, that is, back through the loop. In addition, the power line carrier signal sent by the shutdown module RSD1 of the first-ranked first stage of photovoltaic assembly PV1 may be required to be transmitted to the inverter and then returned to the multiple stages of photovoltaic assemblies PV1 to PVN along the loop. In this manner, carrier signal crosstalk between multiple photovoltaic assemblies within the battery string can be avoided, in view of the fact that the carrier signal crosstalk between the photovoltaic assemblies can easily lead to the false turn-off or false turn-on.

Referring to FIG. 6, in an embodiment, the controller IC of the last or the N-th stage of photovoltaic assembly PVN in the multiple stages of photovoltaic assemblies PV1 to PVN operates the communication unit to continuously send the power line carrier signal, and at the same time, it may be specified that the controllers IC of the multiple stages of photovoltaic assemblies PV1 to PVN continuously monitor, through the communication units, the power line carrier signals returned from the cable. If the controllers of the photovoltaic assemblies PV1 to PVN monitor that the specified parameters of the returned power line carrier signals do not satisfy the preset feature, or the controllers of the photovoltaic assemblies PV1 to PVN do not receive the power line carrier signal within a set period of time, the photovoltaic assemblies PV1 to PVN turn off respective toggle switches S2 to turn off the assemblies PV1 to PVN. In addition, the power line carrier signal emitted from the communication unit operated by the controller IC of the N-th stage of photovoltaic assembly PVN is propagated to the inverter through the negative bus and then transmitted back to the multiple stages of photovoltaic assemblies PV1 to PVN through the positive bus, that is, back through the loop. In this embodiment, the power line carrier signal sent by the shutdown module RSDN of the last stage, that is, the N-th stage of photovoltaic assembly PVN may be required to be transmitted to the inverter and then returned to the multiple stages of photovoltaic assemblies PV1 to PVN along the loop. In this manner, the carrier signal crosstalk between the multiple photovoltaic assemblies within the battery string can be avoided. The positive bus and the negative bus are cables in nature.

Referring to FIG. 6, in an embodiment, in conjunction with FIGS. 4 to 12, the controller operates the communication unit MODU to continuously send the signal onto the cable, which in the foregoing is exemplified by the power line carrier signal PLC to illustrate the working mechanism of the shutdown module. In an alternative embodiment, the power line carrier signal PLC may be replaced by other types of periodic or aperiodic signals, so the signal may be selected from the power line carrier signal or periodic or aperiodic signals and is not limited to a particular type.

Referring to FIG. 9, in an embodiment, the controller IC of the shutdown module RSD is used for controlling the toggle switch S2 provided for the photovoltaic assembly to be turned on or off. The controller IC receives the enabling instruction through the communication unit MODU. For example, the power line carrier signal is received through a power line carrier demodulator of the matched communication unit MODU. The enabling instruction is uploaded from the cable to the controller IC through the power line carrier signal. The coupling element COP senses a carrier signal carrying the enabling instruction emitted from the shutdown control module CTL from the cable, and the coupling element COP may transmit the sensed and extracted power line carrier signal to the communication unit MODU. The communication unit MODU decodes the enabling instruction from the power line carrier carrying the enabling instruction and sends the enabling instruction to the controller IC. The communication unit MODU may receive an external instruction using a conventional communication manner such as wireless communication in addition to wired communication such as the power line carrier. In another embodiment, the communication unit may be directly built into the controller IC, that is, the controller IC is directly integrated with the communication unit.

Referring to FIG. 9, the enabling instruction sent to the controller IC may require that the photovoltaic assembly be restarted, and in response to the enabling instruction, the controller IC turns on the toggle switch S2 to restart the photovoltaic assembly. The shutdown modules RSD 1 to RSDN are used for implementing the rapid shutdown function of the photovoltaic assembly. Shutdown and re-connection are two important states of the photovoltaic assemblies and can satisfy the industry's requirements for the NEC690.12 clause. In many cases, after turned off, the photovoltaic assembly does not need to resume to the on state. For example, when the photovoltaic power station encounters a fire, the assembly generally only needs to be turned off rapidly, but it is likely that the assembly cannot resume to the on state, so it is not necessary to resume the photovoltaic assembly to the on state. Many of the preceding embodiments of the present application can better cope with the emergency situations occurring in the photovoltaic power station. For example, the photovoltaic assembly can be actively and rapidly shut down so as to cut off the direct current in the event of a fire. Determining whether the shutdown module shuts down the power line carrier signal on which the photovoltaic assembly depends is sourced from the shutdown module of the multiple stages of photovoltaic assemblies, rather than from other power line carrier signal transmission devices. This design has great advantages in terms of both cost and shutdown reliability. The disadvantage of using other power line carrier signal transmission devices to operate the shutdown module is that the cost is significantly increased, and moreover, multiple pieces of parameter information of the power line carrier signal emitted from other power line carrier signal transmission devices are hidden for the shutdown module, and then the shutdown module is likely to enable a false determination in the stage of determining whether to shut down the photovoltaic assembly. Since not only power line carrier signals emitted by other power line carrier signal transmission devices but also multiple types of natural noises exist in the loop, the shutdown module can respond to the power line carrier signals emitted from other power line carrier signal transmission devices, and the shutdown module may naturally respond to the multiple types of natural noises in the loop and mistakenly turns off or mistakenly turns on the photovoltaic assembly. Multiple parameters of the signal emitted from any shutdown module are known to each shutdown module, rather than being hidden. It is to be noted that the energy of the direct current bus is supplied to the inverter to perform a direct current-to-alternating current inversion and conversion operation, the noise harmonic pollution of the direct current bus by the inverter is almost inherent and unavoidable, and the embodiments of the present application can better avoid these negative disadvantages which are easy to cause the maloperation.

Referring to FIG. 10, the shutdown control module CTL may be referred to as a master control module, and whether to turn off the multiple stages of photovoltaic assemblies PV1 to PVN is determined at the shutdown control module CTL. An embodiment of the shutdown control module CTL is: an inductive element L1, a capacitive element C1, and a relay S3 are disposed on the cable. The inductive element L1 is connected to the cable so that the inductive element L1 exists in the loop. After the capacitive element C1 and the relay S3 are connected in series, the capacitive element C1 and the relay S3 are connected in parallel with the inductive element L1, and the degree of attenuation of the returned signal may reach the preset attenuation value by turning off the relay, for example, the relay S3. The relay may be a high voltage tolerant direct current relay, and preferably, a relatively cost-effective small signal relay.

Referring to FIG. 11, an embodiment of the shutdown control module CTL is: an attenuator ATT is disposed on the cable, and the degree of attenuation of the returned signal in the loop is adjusted by the attenuator ATT. The attenuator is a type of electronic component that can provide a signal attenuation function. The attenuator may adjust the magnitude of the signal in the loop and may be used for reading the attenuation value of the measured loop and adjusting the impedance matching of the whole loop. The magnitude of the attenuation of the signal may be adjusted by the attenuator ATT, so as to adjust the degree of attenuation of the signal, so that the degree of attenuation of the returned signal can reach the preset attenuation value.

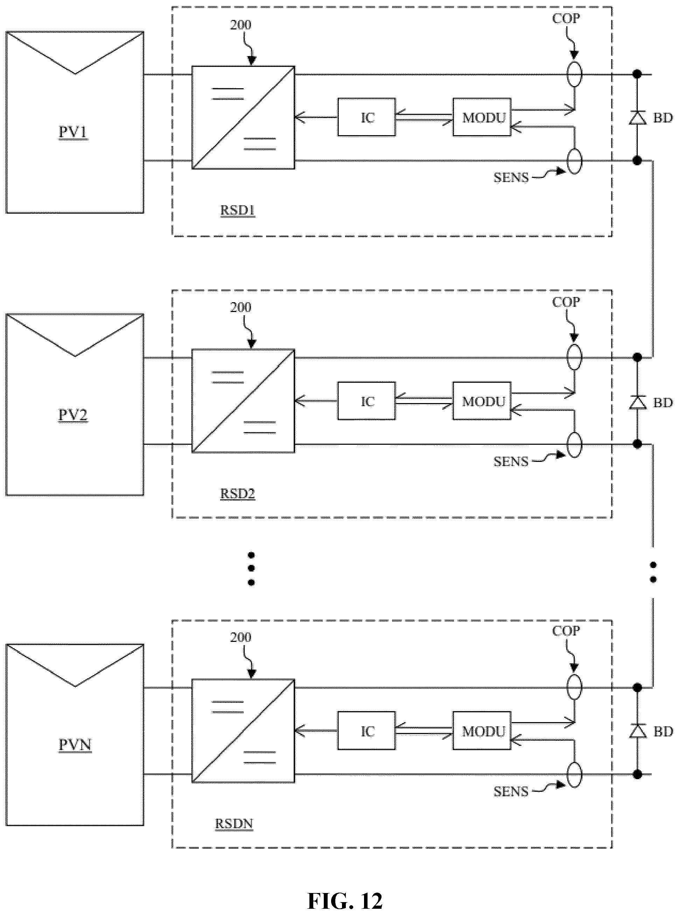

Referring to FIG. 12, an embodiment supporting the rapid shutdown of the photovoltaic assembly is: each photovoltaic assembly in the multiple stages of photovoltaic assemblies PV1 to PVN is provided with one voltage converter, and at the same time, output voltages of multiple voltage converters corresponding to the multiple stages of photovoltaic assemblies PV1 to PVN may be superimposed on each other on a direct current bus and the superimposed voltage is used as a bus voltage. In this case, the multiple voltage converters are connected in series. For example, the first stage of photovoltaic assembly PV1 is provided with a voltage converter 200, and the voltage converter 200 converts electrical energy extracted from one photovoltaic assembly PV1 corresponding to the voltage converter 200 into its own output power and provides an output voltage Voi-1. For example, the second stage of photovoltaic assembly PV2 is provided with a voltage converter 200, and the voltage converter 200 converts electrical energy extracted from one corresponding photovoltaic assembly PV2 into its own output power and provides an output voltage V_{O2}-2. For example, the N-th stage of photovoltaic assembly PVN is provided with a voltage converter 200, and the voltage converter 200 converts electrical energy extracted from one corresponding photovoltaic assembly PVN into its own output power and provides an output voltage V_{ON}-N. The bus voltage is obtained by adding output voltages of all the voltage converters 200, the output voltages of multiple voltage converters connected in series are superimposed and provided to one inverter INVT, and one loop is formed between the multiple voltage converters and the inverter connected in series. The signal sent by the shutdown module of each stage of photovoltaic assembly is transmitted to the inverter and returned to multiple voltage converters along the loop, or the signal is returned to multiple shutdown modules RSD1 to RSDN. It is noted that the preceding embodiments with respect to FIGS. 2 to 11 are applicable to the embodiment of FIG. 12.

Referring to FIG. 12, each voltage converter performs a buck operation, a boost operation, or a buck-boost operation on the output voltage of one photovoltaic assembly corresponding to each voltage converter and outputs the processed voltage. For example, the voltage converter 200 configured for the first stage of photovoltaic assembly PV1 is used for performing a voltage conversion on the initial voltage outputted by the first stage of photovoltaic assembly PV1, where the voltage conversion includes a buck voltage conversion or a boost voltage conversion or a buck-boost voltage conversion. Therefore, the controller IC in the shutdown module RSD1 may be used for operating the voltage converter 200 to perform the voltage conversion such as buck or boost or buck-boost, and the voltage converter 200 as a switching power supply may be a buck converter or a boost converter or a buck-boost converter. In another embodiment, each voltage converter is further used for setting a current and voltage outputted by one photovoltaic assembly corresponding to each voltage converter at a maximum power point, thereby optimizing power of the photovoltaic assembly and achieving maximum power tracking. For example, the voltage converter 200 of the shutdown module RSD1 is used for setting the current and voltage outputted by the corresponding first stage of photovoltaic assembly PV1 at the maximum power point.

Referring to FIG. 12, in an embodiment, the voltage converter 200 of the N-th stage of photovoltaic assembly PVN is used for performing a voltage conversion on the initial voltage outputted by the N-th stage of photovoltaic assembly PVN, where the voltage conversion includes a buck voltage conversion or a boost voltage conversion or a buck-boost voltage conversion. Therefore, the controller IC of the shutdown module RSDN may be used for operating the voltage converter 200 to perform the voltage conversion such as buck or boost or buck-boost, and the voltage converter 200 as a switching power supply may be a buck converter or a boost converter or a buck-boost converter. In another embodiment, each voltage converter is further used for setting the current and voltage outputted by one photovoltaic assembly corresponding to each voltage converter at the maximum power point, thereby optimizing power of the photovoltaic assembly and achieving maximum power tracking. For example, the voltage converter 200 of the shutdown module RSDN is used for setting the current and voltage outputted by the N-th stage of photovoltaic assembly PVN corresponding to the shutdown module RSDN at the maximum power point.

Referring to FIG. 12, in an embodiment, through monitoring the power line carrier signal PLC generated by the other shutdown modules RSDN and returned through the loop, the shutdown module RSD1 matching the photovoltaic assembly PV1 determines whether the corresponding photovoltaic assembly PV1 needs to be shut down. Similarly, the emergency personnel turns off the master switch S1 in the shutdown control module CTL or quickly toggles the master switch S1, for example, performs a toggling operation of turning off and then turning on and then turning off the master switch S 1 so that the specified parameter of the returned power line carrier signal PLC cannot satisfy the preset feature. For example, the actual amplitude magnitude of the returned power line carrier signal is less than the preset amplitude value. For example, the actual spectral distribution of the returned power line carrier signal does not match the preset spectral distribution point. For example, the degree of attenuation of the returned signal, for example, the returned power line carrier signal, reaches the preset attenuation value. If the emergency personnel turns off the master switch in the shutdown control module CTL so that the propagation path of the power line carrier signal PLC on the cable is directly turned off, and thus the shutdown module RSD2 cannot receive the returned power line carrier signal PLC since the propagation path of the carrier in the loop is directly cut off. The controller IC does not receive the power line carrier signal PLC within a set period of time during which it is likely that the emergency personnel turns off the master switch, so it is now determined that the shutdown module RSD1 may be turned off so as to shut down the photovoltaic assembly PV1.

Referring to FIG. 12, in an embodiment, through monitoring the power line carrier signal PLC generated by the shutdown module RSD1 and returned through the loop, the shutdown module RSD1 matching the photovoltaic assembly PV1 determines whether the corresponding photovoltaic assembly PV1 needs to be shut down. For example, through an operation of the shutdown control module CTL, the specified parameter of the returned power line carrier signal PLC cannot satisfy the preset feature. For example, the actual amplitude magnitude of the returned power line carrier signal is less than the preset amplitude value. For example, the actual spectral distribution of the returned power line carrier signal does not match the preset spectral distribution point. For example, the degree of attenuation of the returned signal, for example, the returned power line carrier signal, reaches the preset attenuation value. If the emergency personnel turns off the master switch in the shutdown control module CTL so that the propagation path of the power line carrier signal PLC on the cable is directly turned off, and thus the shutdown module RSD2 cannot receive the returned power line carrier signal PLC since the propagation path of the carrier in the loop is directly cut off. The controller IC does not receive the power line carrier signal PLC within a set period of time during which it is likely that the emergency personnel turns off the master switch, so it is now determined that the shutdown module RSD1 needs to be turned off so as to shut down the photovoltaic assembly PV1.

Referring to FIG. 12, in an embodiment, the controller IC of the shutdown module RSD1 is further used for monitoring the degree of attenuation of the returned signal. If the degree of attenuation reaches the preset attenuation value, the controller IC may lower the output voltage of the voltage converter 200 or lower the output power of the voltage converter 200. The controller IC of the shutdown module RSDN is further used for monitoring the degree of attenuation of the returned signal. If the degree of attenuation reaches the preset attenuation value, the controller IC may lower the output voltage of the voltage converter 200 or lower the output power of the voltage converter 200. If the voltage converters 200 of the shutdown modules RSD 1 to RSDN lower output voltages and output a low voltage level, the bus voltage obtained by adding the output voltages of the multiple voltage converters 200 corresponding to the multiple shutdown modules may quickly fall from hundreds of volts to near zero, and the bus voltage is generally allowed to fall within a safe voltage range of several volts to several tens of volts. The controller IC lowers the output voltage of the voltage converter 200, substantially equivalent to achieving the rapid shutdown of the photovoltaic assembly. The output voltage of the voltage converter 200 in the case where the degree of attenuation of the returned signal does not reach the preset attenuation value is much greater than the output voltage of the voltage converter 200 in the case where the degree of attenuation of the returned signal reaches the preset attenuation value. For example, the output voltage of the voltage converter 200 falls within a first voltage range in the case where the degree of attenuation of the returned signal does not reach the preset attenuation value, and the output voltage of the voltage converter 200 falls within a second voltage range in the case where the degree of attenuation of the returned signal reaches the preset attenuation value, where the first voltage range is much greater than the second voltage range. The second voltage range is set as close to zero as possible. The embodiments of the present application can enable the photovoltaic system to implement the rapid shutdown function, reduce the risk of electrical shock to emergency personnel, and satisfy the NEC690.12 clause.

Referring to FIG. 11, in an embodiment, in conjunction with FIGS. 2 to 12, the communication unit MODU is used for loading the power line carrier signal generated by the communication unit MODU onto the cable that serially connects the multiple stages of photovoltaic assemblies PV1 to PVN and extracting the returned power line carrier signal from the cable. The controller IC operates the communication unit MODU to continuously send the power line carrier signal having the preset feature. The controller IC continuously monitors, through the communication unit MODU, the power line carrier signal returned from the cable. The controller IC monitors whether the specified parameter of the received power line carrier signal satisfies the preset feature and if the specified parameter does not satisfy the preset feature or the controller IC does not receive the power line carrier signal within a set period of time, the toggle switch S2 is turned off so as to shut down the photovoltaic assembly. In an optional embodiment, the controller IC also monitors the degree of attenuation of the returned signal, for example, the returned power line carrier signal. If the degree of attenuation of the returned power line carrier signal reaches the preset attenuation value, the toggle switch S2 is turned off so as to shut down the photovoltaic assembly.

Referring to FIG. 12, in an embodiment, in conjunction with FIGS. 2 to 11, the communication unit MODU is used for loading the power line carrier signal generated by the communication unit MODU onto the cable that serially connects the multiple voltage converters 200 and extracting the returned power line carrier signal from the cable. The controller IC operates the communication unit MODU to continuously send the power line carrier signal having the preset feature. The controller IC continuously monitors, through the communication unit MODU, the power line carrier signal returned from the cable. The controller IC monitors whether the specified parameter of the received power line carrier signal satisfies the preset feature and if the specified parameter does not satisfy the preset feature or the controller IC does not receive the power line carrier signal within a set period of time, the output voltage of the voltage converter 200 is lowered, which is equivalent to shutting down the photovoltaic assembly. The controller IC monitors the degree of attenuation of the returned signal, for example, the returned power line carrier signal. If the degree of attenuation of the returned power line carrier signal reaches the preset attenuation value, the output voltage of the voltage converter 200 is lowered, which is equivalent to shutting down the photovoltaic assembly. The attenuation value of the signal in the embodiments of the present application may be calculated according to an attenuation calculation method in the related art. It is one of the main sources of making a false determination that the signals emitted from the shutdown modules are directly captured by multiple local shutdown modules without passing through the loop and a shutdown determination result is generated.

Exemplary embodiments of the particular structure of the embodiments are set forth above in the description and drawings.

## Claims

1. A shutdown device for a photovoltaic assembly, comprising a shutdown module provided to the photovoltaic assembly, wherein the shutdown module comprises:
a toggle switch configured to control whether to shut down the photovoltaic assembly;
a controller configured to control the toggle switch to be turned on or off; and
a communication unit configured to load a power line carrier signal generated by the communication unit onto a cable that serially connects a plurality of stages of photovoltaic assemblies and further configured to extract a returned power line carrier signal from the cable;
wherein the controller is further configured to operate the communication unit to continuously send a power line carrier signal having a preset feature;
the controller is further configured to continuously monitor, through the communication unit, the returned power line carrier signal extracted from the cable; and
the controller is further configured to monitor whether a specified parameter of the extracted returned power line carrier signal satisfies the preset feature and in response to the specified parameter not satisfying the preset feature or not receiving the power line carrier signal within a set period of time, turn off the toggle switch to shut down the photovoltaic assembly.

2. The shutdown device for a photovoltaic assembly of claim 1, wherein in a case where the plurality of stages of photovoltaic assemblies are connected in series, each stage of photovoltaic assembly is configured with one corresponding shutdown module, wherein
the shutdown module corresponding to any stage of photovoltaic assembly is configured to, through monitoring a power line carrier signal generated by any stage of shutdown module and returned, determine whether the any stage of photovoltaic assembly is shut down.

3. The shutdown device for a photovoltaic assembly of claim 1, wherein in a case where the plurality of stages of photovoltaic assemblies are connected in series, each stage of photovoltaic assembly is configured with one corresponding shutdown module, wherein
the shutdown module corresponding to any stage of photovoltaic assembly is configured to, through monitoring a power line carrier signal generated by a shutdown module corresponding to an other photovoltaic assembly other than the any stage of photovoltaic assembly and returned, determine whether the any stage of photovoltaic assembly is shut down.

4. The shutdown device for a photovoltaic assembly of claim 1, wherein the specified parameter comprises an amplitude value of the power line carrier signal, and the preset feature comprises a preset amplitude value; and
the controller is further configured to, in response to determining that the amplitude value of the returned power line carrier signal is less than the preset amplitude value, turn off the toggle switch to shut down the photovoltaic assembly.

5. The shutdown device for a photovoltaic assembly of claim 1, wherein the specified parameter comprises a spectral distribution of the power line carrier signal in a frequency domain, and the preset feature comprises a preset spectral distribution point; and
the controller is further configured to, in response to the spectral distribution of the received returned power line carrier signal not matching the preset spectral distribution point and the spectral distribution of the received returned power line carrier signal having a missed spectral distribution point, turn off the toggle switch to shut down the photovoltaic assembly.

6. The shutdown device for a photovoltaic assembly of claim 1, further comprising a master switch disposed on the cable;
wherein the master switch is configured to, in a case where the master switch is turned off, enable the specified parameter not satisfy the preset feature, or in a case where the master switch is turned off, enable a propagation path of the power line carrier signal disconnected so that the controller is not capable of receiving the returned power line carrier signal.

7. The shutdown device for a photovoltaic assembly of claim 1, further comprising a noise source disposed on the cable and used for generating a noise pulse;
wherein the noise source is configured to actively inject an additional noise pulse on the cable to interfere with the power line carrier signal so that the specified parameter does not satisfy the preset feature.

8. The shutdown device for a photovoltaic assembly of claim 1, further comprising a coupling device disposed on the cable;
wherein the coupling device is configured to absorb part of the power line carrier signal to attenuate the power line carrier signal so that the specified parameter does not satisfy the preset feature.

9. The shutdown device for a photovoltaic assembly of claim 1, wherein the shutdown module is configured to receive a power line carrier signal carrying an enabling instruction;
the controller is further configured to receive the enabling instruction through a matched communication unit; and
the controller is further configured to, in response to the enabling instruction, turn on the toggle switch to return the photovoltaic assembly to an on state.

10. The shutdown device for a photovoltaic assembly of claim 2 or 3, configured to provide a superimposed voltage of respective output voltages of the plurality of stages of photovoltaic assemblies superimposed on each other to an inverter, wherein a loop is formed between the plurality of stages of photovoltaic assemblies and the inverter connected in series; and
the shutdown module corresponding to each stage of photovoltaic assembly is configured to send the power line carrier signal to the inverter, wherein the power line carrier signal is returned to the plurality of stages of photovoltaic assemblies along the loop.

11. A shutdown method for a photovoltaic assembly, comprising:
providing a toggle switch at an output end of each of a plurality of stages of photovoltaic assemblies, wherein the toggle switch is configured to control whether to shut down the each stage of photovoltaic assembly;
providing a controller corresponding to the toggle switch, wherein the controller is configured to control the toggle switch to be turned on or off, and the controller is provided with a corresponding communication unit;
operating, by the controller, the communication unit to continuously send a power line carrier signal having a preset feature to a cable that serially connects the plurality of stages of photovoltaic assemblies;
continuously monitoring, by the controller, through the communication unit, the power line carrier signal returned from the cable; and
determining, by the controller, whether a specified parameter of the returned power line carrier signal satisfies the preset feature; and in response to the specified parameter of the returned power line carrier signal not satisfying the preset feature or not receiving the power line carrier signal within a set period of time, turning off, by the controller, the toggle switch to shut down the photovoltaic assembly.

12. The method of claim 11, further comprising:
operating a plurality of controllers in the plurality of stages of photovoltaic assemblies, and providing a superimposed voltage of respective output voltages of the plurality of stages of photovoltaic assemblies superimposed on each other to an inverter, wherein a loop is formed between the plurality of stages of photovoltaic assemblies and the inverter connected in series, and each stage of photovoltaic assembly is provided with a corresponding shutdown module, wherein the shutdown module comprises the controller and the toggle switch; and
sending, by the shutdown module, the power line carrier signal to the inverter, wherein the sent power line carrier signal is returned to the plurality of stages of photovoltaic assemblies along the loop.

13. The method of claim 12, wherein the loop is provided with a master switch connected to the cable, wherein the method further comprises:
turning off the master switch so that the specified parameter is not capable of satisfying the preset feature, or turning off a propagation path of the power line carrier signal so that the controller is not capable of receiving the returned power line carrier signal.

14. The method of claim 12, further comprising:
providing a noise source for generating a noise pulse on the cable, and actively injecting an additional noise pulse generated by the noise source into the cable to interfere with the power line carrier signal, so that the specified parameter is not capable of satisfying the preset feature; or
providing a coupling device on the loop, and using the coupling device to absorb part of the power line carrier signal to attenuate the power line carrier signal so that the specified parameter is not capable of satisfying the preset feature.

15. The method of claim 12, wherein the plurality of stages of photovoltaic assemblies are connected in series, and each stage of photovoltaic assembly is provided with the shutdown module, wherein the shutdown module comprises the controller and the toggle switch; wherein the method further comprises:
through monitoring a power line carrier signal generated by the shutdown module and returned, determining, by the shutdown module corresponding to any stage of photovoltaic assembly, whether the any stage of photovoltaic assembly is shut down.

16. The method of claim 12, wherein the plurality of stages of photovoltaic assemblies are connected in series, and each stage of photovoltaic assembly is provided with a shutdown module, wherein the shutdown module comprises the controller and the toggle switch; wherein the method further comprises:
through monitoring a power line carrier signal generated by a shutdown module of an other photovoltaic assembly other than any stage of photovoltaic assembly and returned, determining, by the shutdown module of the any stage of photovoltaic assembly, whether the any stage of photovoltaic assembly is shut down.

17. The method of claim 11, wherein the specified parameter comprises an amplitude value of the power line carrier signal, and the preset feature comprises a preset amplitude value; wherein the method further comprises:
turning off, by the controller, the photovoltaic assembly in response to the amplitude value of the returned power line carrier signal being less than the preset amplitude value.

18. The method of claim 11, wherein the specified parameter comprises a spectral distribution of the power line carrier signal in a frequency domain, and the preset feature comprises a preset spectral distribution point; wherein the method further comprises:
in response to the spectral distribution of the returned power line carrier signal not matching the preset spectral distribution point and the returned power line carrier signal having a missed spectral distribution point, turning off, by the controller, the photovoltaic assembly.

19. A shutdown method for a photovoltaic assembly, comprising:
configuring a plurality of stages of photovoltaic assemblies to be connected in series, and providing a superimposed voltage of output voltages of the plurality of stages of photovoltaic assemblies superimposed on each other to an inverter, wherein a loop is formed between the plurality of stages of photovoltaic assemblies and the inverter;
providing a shutdown device at an output end of each of the plurality of stages of photovoltaic assemblies, wherein the shutdown device comprises a shutdown module provided to the photovoltaic assembly, wherein the shutdown module comprises a toggle switch for controlling whether the each stage of photovoltaic assembly is shut down and a controller for controlling whether the toggle switch to be turned on or off, wherein the controller is provided with a communication unit;
operating, by the controller, the communication unit to continuously send a power line carrier signal having a preset feature to a cable that serially connects the plurality of stages of photovoltaic assemblies;
continuously monitoring, by the controller, through the communication unit, the power line carrier signal returned from the cable;
determining, by the controller, whether a specified parameter of the received returned power line carrier signal satisfies the preset feature; and
in response to the specified parameter of the returned power line carrier signal not satisfying the preset feature or not receiving the power line carrier signal within a set period of time, turning off, by the controller, the toggle switch to shut down the photovoltaic assembly.

20. The method of claim 19, further comprising:
through monitoring a power line carrier signal generated by the shutdown module and returned through the loop, determining, by the shutdown module of any stage of photovoltaic assembly, whether the any stage of photovoltaic assembly is shut down; or
through monitoring a power line carrier signal generated by a shutdown module of an other photovoltaic assembly other than any stage of photovoltaic assembly and returned through the loop, determining, by the shutdown module of the any stage of photovoltaic assembly, whether the any stage of photovoltaic assembly is shut down.

21. The method of claim 19, wherein the loop is provided with a shutdown control module, wherein the shutdown control module comprises a master switch connected to the cable; wherein the method further comprises:
turning off the master switch so that the specified parameter is not capable of satisfying the preset feature, or turning off a propagation path of the power line carrier signal so that the controller is not capable of receiving the returned power line carrier signal.

22. The method of claim 19, wherein the loop is provided with a shutdown control module; wherein the method further comprises:
actively injecting, by the shutdown control module, an additional noise pulse into the cable so as to interfere with the power line carrier signal, so that the specified parameter is not capable of satisfying the preset feature; or
absorbing, by the shutdown control module through a coupling device, part of the power line carrier signal to attenuate the power line carrier signal so that the specified parameter is not capable of satisfying the preset feature; or
adjusting impedance in the loop to change a degree of attenuation of the power line carrier signal in the loop so that the specified parameter is not capable of satisfying the preset feature.

23. A shutdown device for a photovoltaic assembly, comprising a shutdown module provided to the photovoltaic assembly, wherein the shutdown module comprises:
a toggle switch configured to control whether to shut down the photovoltaic assembly;
a controller configured to control the toggle switch to be turned on or off; and
a communication unit configured to load a signal generated by the communication unit onto a cable that serially connects a plurality of stages of photovoltaic assemblies and further configured to extract a returned signal from the cable;
wherein the controller is further configured to operate the communication unit to continuously send the signal onto the cable;
the controller is further configured to continuously monitor, through the communication unit, the signal returned from the cable; and
the controller is further configured to monitor a degree of attenuation of the returned signal; and the controller is further configured to, in response to the degree of attenuation of the returned signal reaching a preset attenuation value, turn off the toggle switch to shut down the photovoltaic assembly.

24. The shutdown device for a photovoltaic assembly of claim 23, wherein the signal is one of a power line carrier signal, a periodic signal, and an aperiodic signal.

25. The shutdown device for a photovoltaic assembly of claim 23, wherein in a case where the plurality of stages of photovoltaic assemblies are connected in series, each stage of photovoltaic assembly is configured with one corresponding shutdown module, wherein
the shutdown module of any stage of photovoltaic assembly is configured to, through monitoring a signal generated by the shutdown module of the any stage of photovoltaic assembly and returned, determine whether the any stage of photovoltaic assembly is shut down.

26. The shutdown device for a photovoltaic assembly of claim 23, wherein in a case where the plurality of stages of photovoltaic assemblies are connected in series, each stage of photovoltaic assembly is configured with one corresponding shutdown module, wherein
the shutdown module of any stage of photovoltaic assembly is configured to, through monitoring a signal generated by a shutdown module of an other photovoltaic assembly other than the any stage of photovoltaic assembly and returned, determine whether the any stage of photovoltaic assembly is shut down.

27. The shutdown device for a photovoltaic assembly of claim 23, wherein a case where the degree of attenuation of the signal reaches the preset attenuation value comprises a case where the signal is attenuated to zero decibels, and the case where the signal is attenuated to zero decibels corresponds to a case where the controller does not receive the returned signal.

28. The shutdown device for a photovoltaic assembly of claim 23, wherein an attenuator is disposed on the cable;
wherein the attenuator is configured to adjust the degree of attenuation of the signal so that the degree of attenuation of the returned signal reaches the preset attenuation value.

29. The shutdown device for a photovoltaic assembly of claim 23, wherein a master switch is disposed on the cable;
wherein the master switch is configured to, in a case where the master switch is turned off, cause a propagation path of the signal to be turned off so that the controller is not capable of receiving the returned signal.

30. The shutdown device for a photovoltaic assembly of claim 23, further comprising a noise source disposed on the cable and used for generating a noise pulse;
wherein the noise source is configured to actively inject an additional noise pulse on the cable to interfere with the signal so that the degree of attenuation of the returned signal reaches the preset attenuation value.

31. The shutdown device for a photovoltaic assembly of claim 23, further comprising a coupling device disposed on the cable;
wherein the coupling device is configured to absorb part of the signal to attenuate the signal so that the degree of attenuation of the returned signal reaches the preset attenuation value.

32. The shutdown device for a photovoltaic assembly of claim 23, further comprising an inductive element, a capacitive element, and a relay which are disposed on the cable, wherein the capacitive element is connected in series with the relay, and a series circuit formed by the capacitive element and the relay is connected in parallel with the inductive element; and
the relay is configured to, in a case where the relay is turned off, cause the degree of attenuation of the returned signal to reach the preset attenuation value.

33. The shutdown device for a photovoltaic assembly of claim 23, wherein the shutdown module is configured to receive an other set of signals carrying an enabling instruction; and the controller is further configured to receive the enabling instruction from the other set of signals through a matched communication unit, to turn on the toggle switch in response to the enabling instruction, and to return the photovoltaic assembly to an on state.

34. The shutdown device for a photovoltaic assembly of claim 25 or 26, which is configured to provide a superimposed voltage of respective output voltages of the plurality of stages of photovoltaic assemblies superimposed on each other to an inverter, wherein a loop is formed between the plurality of stages of photovoltaic assemblies and the inverter connected in series; and
the shutdown module of each stage of photovoltaic assembly is configured to send a signal to the inverter, wherein the signal is returned to the plurality of stages of photovoltaic assemblies along the loop.

35. A shutdown method for a photovoltaic assembly, comprising:
providing a toggle switch at an output end of the photovoltaic assembly, wherein the toggle switch is configured to control a shutdown state of the photovoltaic assembly;
providing a controller corresponding to the toggle switch, wherein the controller controls the toggle switch to be turned on or off, and the controller is provided with a corresponding communication unit;
operating, by the controller, the communication unit to continuously send a signal to a cable that serially connects a plurality of stages of photovoltaic assemblies;
continuously monitoring, by the controller, through the communication unit, the signal returned from the cable;
determining, by the controller, whether a degree of attenuation of the returned signal reaches a preset attenuation value; and
in response to the degree of attenuation of the returned signal reaching the preset attenuation value, turning off, by the controller, the toggle switch to shut down the photovoltaic assembly.

36. The method of claim 35, further comprising:
operating a plurality of controllers in the plurality of stages of photovoltaic assemblies, and providing a superimposed voltage of respective output voltages of the plurality of stages of photovoltaic assemblies superimposed on each other to an inverter, wherein a loop is formed between the plurality of stages of photovoltaic assemblies and the inverter connected in series, and each stage of photovoltaic assembly in the plurality of stages of photovoltaic assemblies is provided with a corresponding shutdown module, wherein the shutdown module comprises the controller and the toggle switch; and
sending, by the shutdown module, the signal to the inverter, wherein the sent signal is returned to the plurality of stages of photovoltaic assemblies along the loop.

37. The method of claim 36, wherein the loop is provided with a master switch connected to the cable; wherein the method further comprises turning off the master switch to turn off a propagation path of the signal so that the controller is not capable of receiving the returned signal.

38. The method of claim 36, further comprising:
providing a noise source for generating a noise pulse on the cable, and actively injecting an additional noise pulse generated by the noise source into the cable to interfere with the signal; or
providing a coupling device on the loop, wherein the coupling device absorbs part of the signal to attenuate the signal so that the degree of attenuation of the returned signal reaches the preset attenuation value.

39. The method of claim 36, wherein the loop is provided with an attenuator connected to the cable; wherein the method further comprises adjusting, by the attenuator, the degree of attenuation of the signal so that the degree of attenuation of the returned signal reaches the preset attenuation value.

40. The method of claim 35, wherein the plurality of stages of photovoltaic assemblies are connected in series, and each stage of photovoltaic assembly is provided with a corresponding shutdown module, wherein the shutdown module comprises the controller and the toggle switch; wherein the method further comprises:
through monitoring a signal generated by the shutdown module of any stage of photovoltaic assembly and returned, determining, by the shutdown module of the any stage of photovoltaic assembly, whether the any stage of photovoltaic assembly is shut down.

41. The method of claim 35, wherein the plurality of stages of photovoltaic assemblies are connected in series, and each stage of photovoltaic assembly is provided with a corresponding shutdown module, wherein the shutdown module comprises the controller and the toggle switch; wherein the method further comprises:
through a monitoring signal generated by a shutdown module of an other photovoltaic assembly other than any stage of photovoltaic assembly and returned, determining, by the shutdown module of the any stage of photovoltaic assembly, whether the any stage of photovoltaic assembly is shut down.

42. A shutdown method for a photovoltaic assembly, comprising:
configuring a plurality of stages of photovoltaic assemblies to be connected in series, and providing a superimposed voltage of output voltages of the plurality of stages of photovoltaic assemblies superimposed on each other to an inverter, wherein a loop is formed between the plurality of stages of photovoltaic assemblies and the inverter;
providing a shutdown device at an output end of each of the plurality of stages of photovoltaic assemblies, wherein the shutdown device comprises a shutdown module provided to the photovoltaic assembly, wherein the shutdown module comprises a toggle switch for controlling whether the each stage of photovoltaic assembly is shut down and a controller for controlling whether the toggle switch to be turned on or off, wherein the controller is provided with a communication unit;
operating, by the controller, the communication unit to continuously send a signal to a cable that serially connects the plurality of stages of photovoltaic assemblies;
continuously monitoring, by the controller, through the communication unit, the signal returned from the cable;
determining, by the controller, whether a degree of attenuation of the returned signal reaches a preset attenuation value; and
in response to the degree of attenuation of the returned signal reaching the preset attenuation value, turning off, by the controller, the toggle switch to shut down the photovoltaic assembly.

43. The method of claim 42, further comprising:
through monitoring a signal generated by any stage of photovoltaic assembly and returned through the loop, determining, by the shutdown module of the any stage of photovoltaic assembly, whether the any stage of photovoltaic assembly is shut down; or
through a monitoring signal generated by a shutdown module of an other photovoltaic assembly other than any stage of photovoltaic assembly and returned through the loop, determining, by the shutdown module of the any stage of photovoltaic assembly, whether the any stage of photovoltaic assembly is shut down.

44. The method of claim 42, wherein the loop is provided with a shutdown control module, wherein the shutdown control module comprises a master switch connected to the cable; wherein the method further comprises turning off the master switch to turn off a propagation path of the signal so that the controller is not capable of receiving the returned signal.

45. The method of claim 42, wherein the loop is provided with a shutdown control module; wherein the method further comprises:
actively injecting, by the shutdown control module, an additional noise pulse generated by a noise source into the cable to interfere with the signal; or
absorbing, by the shutdown control module, through a coupling device of the shutdown control module, part of the signal from the cable to attenuate the signal; or
adjusting impedance in the loop so that the degree of attenuation of the returned signal reaches the preset attenuation value.

46. A shutdown device for a photovoltaic assembly, comprising a shutdown module provided to the photovoltaic assembly, wherein the shutdown module comprises:
a voltage converter provided to the photovoltaic assembly, wherein the voltage converter is configured to perform a voltage conversion on an initial voltage outputted by the photovoltaic assembly and further configured to provide an output voltage;
a controller configured to operate the voltage converter to perform the voltage conversion; and
a communication unit configured to load a signal generated by the communication unit onto a cable that serially connects a plurality of voltage converters and further configured to extract a returned signal from the cable;
wherein the controller is further configured to operate the communication unit to continuously send the signal onto the cable;
the controller is further configured to continuously monitor, through the communication unit, the signal returned from the cable; and
the controller is further configured to monitor a degree of attenuation of the returned signal; and the controller is further configured to, in response to the degree of attenuation of the returned signal reaching a preset attenuation value, lower the output voltage of the voltage converter.

47. The shutdown device for a photovoltaic assembly of claim 46, wherein in a case where the plurality of voltage converters corresponding to a plurality of stages of photovoltaic assemblies are connected in series, each stage of photovoltaic assembly is provided with one corresponding shutdown module, wherein a superimposed voltage of output voltages of the plurality of voltage converters superimposed on each other is provided to an inverter, and a loop is formed between the plurality of voltage converters and the inverter connected in series;
wherein the shutdown module of each stage of photovoltaic assembly is configured to send the signal to the inverter, wherein the sent signal is returned to the plurality of voltage converters along the loop.

48. The shutdown device for a photovoltaic assembly of claim 46, wherein the shutdown module of any stage of photovoltaic assembly is configured to, through monitoring a signal generated by the any stage of photovoltaic assembly and returned through the loop, determine whether the any stage of photovoltaic assembly is shut down; or
the shutdown module of any stage of photovoltaic assembly is configured to, through monitoring a signal generated by a shutdown module of an other photovoltaic assembly other than the any stage of photovoltaic assembly and returned through the loop, determine whether the any stage of photovoltaic assembly is shut down.

49. The shutdown device for a photovoltaic assembly of claim 46, further comprising a shutdown control module disposed on the cable, wherein the shutdown control module comprises a master switch connected to the cable;
wherein the master switch is configured to, in a case where the master switch is turned off, turn off a propagation path of the signal so that the controller is not capable of receiving the returned signal.

50. The shutdown device for a photovoltaic assembly of claim 46, further comprising a shutdown control module disposed on the cable, wherein the shutdown control module is configured to actively inject an additional noise pulse generated by a noise source into the cable so as to interfere with the signal; or
the shutdown device for a photovoltaic assembly further comprises a shutdown control module disposed on the cable, wherein the shutdown control module comprises a coupling device configured to absorb part of the signal from the cable to attenuate the signal; or
the shutdown device for a photovoltaic assembly is further configured to adjust impedance in a loop so that the degree of attenuation of the returned signal reaches the preset attenuation value.
